(19) Europäisches Patentamt
European Patent Office
Office européen des brevets

(11) EP 4 474 310 B1

(12) # FASCICULE DE BREVET EUROPEEN

(45) Date de publication et mention de la délivrance du brevet:
**26.11.2025 Bulletin 2025/48**

(21) Numéro de dépôt: **24180044.0**

(22) Date de dépôt: **04.06.2024**

(51) Classification Internationale des Brevets (IPC):
***B65D 65/46*** *(2006.01)* ***B65D 85/804*** *(2006.01)*
***C08L 67/04*** *(2006.01)* ***C08L 101/16*** *(2006.01)*

(52) Classification Coopérative des Brevets (CPC):
(C-Sets disponibles)
**B65D 85/8043; B65D 65/466; C08L 67/04; C08L 101/16** (Cont.)

(54) **CAPSULE À BASE DE POLYHYDROXYALKANOATE POUR LA PRÉPARATION DE BOISSON ET SON PROCÉDÉ DE FABRICATION**

POLYHYDROXYALKANOATKAPSEL ZUR HERSTELLUNG VON GETRÄNKEN UND VERFAHREN ZU IHRER HERSTELLUNG

POLYHYDROXYALKANOATE CAPSULE FOR BEVERAGE PREPARATION AND PROCESS FOR ITS MANUFACTURE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **05.06.2023 FR 2305635**

(43) Date de publication de la demande:
**11.12.2024 Bulletin 2024/50**

(73) Titulaire: **My Tea Cup AG**
**8810 Horgen (CH)**

(72) Inventeurs:
- **SANDHERR, Max**
  **8708 Mannedorf (CH)**
- **SCHAEFFER, Jacques**
  **1801 Le Mont-Pelerin (CH)**
- **MASSACRIER, Laurent**
  **63800 Coumon- d'Auvergne (FR)**

(74) Mandataire: **August Debouzy**
**7, rue de Téhéran**
**75008 Paris (FR)**

(56) Documents cités:
**WO-A1-2017/106191** **WO-A1-2021/119240**
**WO-A1-2021/239982** **US-A1- 2014 088 233**
**US-A1- 2017 342 261** **US-A1- 2022 089 861**
**US-B2- 10 669 417**

- **CHEA VORLEAK ET AL: "Poly(3-hydroxybutyrate- co -3-hydroxyvalerate) films for food packaging: Physical-chemical and structural stability under food contact conditions", JOURNAL OF APPLIED POLYMER SCIENCE, vol. 133, no. 2, 10 January 2016 (2016-01-10), US, XP093107119, ISSN: 0021-8995, DOI: 10.1002/app.41850**
- **LI ZONGLIN ET AL: "Thermal and Mechanical Properties of the Biocomposites of Miscanthus Biocarbon and Poly(3-Hydroxybutyrate-co-3-Hydroxyvalerate) (PHBV)", POLYMERS, vol. 12, no. 6, 6 June 2020 (2020-06-06), pages 1300, XP093106936, DOI: 10.3390/polym12061300**
- **MODI SUNNY ET AL: "Assessment of PHB with varying hydroxyvalerate content for potential packaging applications", EUROPEAN POLYMER JOURNAL, vol. 47, no. 2, 1 February 2011 (2011-02-01), GB, pages 179 - 186, XP093106938, ISSN: 0014-3057, DOI: 10.1016/ j.eurpolymj.2010.11.010**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC):
(Cont.)

C-Sets
**C08L 67/04, C08L 67/04**

## Description

### DOMAINE TECHNIQUE DE L'INVENTION

La présente invention concerne le domaine des capsules fermées biodégradables et compostables, par un compostage industriel et/ou par un compostage domestique ou méthanisable à usage unique, contenant au moins une substance comestible. La substance comestible peut être sous forme de poudre pour la préparation d'une boisson, par exemple du café, prévue pour être extraite sous pression ou sous température, ou sous forme de liquide pour la préparation d'une boisson, par exemple une limonade ou des compléments alimentaires, prévu pour être extrait à basse pression et basse température ou température ambiante.

### ETAT DE LA TECHNIQUE

Les portions pré-dosées et préemballées de café sont largement utilisées pour préparer des cafés de type expresso car elles sont simples et faciles d'utilisation.

Il existe généralement deux types de capsules sur le marché, des capsules rigides constituées typiquement d'un contenant et un opercule et des capsules flexibles contenant des couches filtrantes. La présente invention vise la première catégorie de capsule.

Des capsules rigides du type Nespresso® sont largement répandues en Europe. Ces capsules comprennent un corps ou contenant et un opercule qui sont traditionnellement constitués essentiellement d'aluminium.

Le processus de délivrance de la boisson finale suit le schéma suivant : un fluide, tel que de l'eau ou du lait, est injecté dans la capsule pour interagir avec la substance contenue dans la capsule afin de produire la boisson souhaitée, et lorsqu'une quantité suffisante de fluide remplit la capsule, cette dernière s'ouvre sous la pression du fluide pour libérer la boisson préparée.

Par exemple, l'ouverture de la capsule peut être accomplie en pressant une face d'extraction de la capsule avec une force effectuée en augmentant la pression du fluide à l'intérieur de la capsule contre une structure d'ouverture prévue dans le porte-capsule de sorte que la face d'extraction est déchirée lorsqu'elle atteint une contrainte de rupture de celui-ci. La structure d'ouverture peut être un certain nombre d'éléments en relief et en retrait, par exemple des éléments pyramidaux, sur lesquels la face d'extraction s'étend et se déchire sous l'effet de la pression interne du fluide. Une telle préparation de boisson à pression contrôlée présente l'avantage de pouvoir produire une boisson de haute qualité.

Il existe également des capsules dont l'opercule et le corps sont constitués de matières plastiques.

La demande WO2021/239982A1 au nom de la demanderesse décrit une capsule fermée dont le fond, la paroi latérale et le rebord circulaire sont formés par moulage par injection d'au moins une formulation comprenant :

- (i) au moins un polymère choisi parmi les polyhydroxybutyrate, et
- (ii) au moins un ingrédient choisi parmi les silicates, les vitamines E, les protéines animales ou végétales plastifiées, ou leurs mélanges.

Une capsule de l'art antérieur est également décrite dans US 2017/342261 A1.

Les capsules de l'art antérieur qui utilisent des matières thermoplastiques peuvent avoir l'inconvénient d'être fragiles et parfois peuvent se casser durant la chaîne de fabrication ou lors de leurs utilisations quand bien même elles possèdent une très bonne fonction barrière à l'oxygène et/ou à la vapeur d'eau. Il a été constaté dans l'art antérieur, que lors de la fabrication des capsules en polyhydroxyalkanoates (PHA) cristallin, une grande variation des propriétés mécaniques de la capsule était obtenue en raison de la mauvaise stabilité thermique du PHA. Ces capsules de l'art antérieur peuvent également se déformer et/ou casser lorsqu'elles sont soumises à des contraintes de températures.

La demanderesse a donc mis au point une nouvelle capsule qui permet de surmonter les problèmes de l'art antérieur tout en conservant la bonne fonction barrière à l'oxygène et/ou à la vapeur d'eau.

C'est donc un objet de la présente invention que de fournir des capsules qui soient rigides mais pas cassantes tout en ayant une bonne fonction barrière à l'oxygène et à la vapeur d'eau et tout en assurant des caractéristiques mécaniques constantes, une bonne tenue à la température ceci autant lors de leurs utilisations dans une machine d'extraction que lors de leur fabrication tout en réduisant les défauts de production. Ces capsules sont par ailleurs biodégradables par un compostage industriel et/ou par un compostage domestique voire méthanisable, et permettent de préparer une boisson, telle qu'un café, de qualité satisfaisante, lorsqu'elles sont utilisées dans une machine de type expresso, en particulier une machine Nespresso®.

### RESUME DE L'INVENTION

Plus précisément, la présente invention concerne une capsule pour la préparation d'une boisson, ladite capsule

comportant une enceinte comportant au moins une paroi latérale ayant un rebord circulaire, la paroi latérale et le rebord circulaire étant formés par moulage par injection ou par thermoformage d'au moins une formulation comprenant :

(i) au moins un polymère P1 choisi parmi les polyhydroxyalkanoates (PHA); et
(ii) au moins un polymère P2 choisi parmi les polyhydroxyalkanoate (PHA), ledit polymère P1 ayant un degré de cristallinité (Kc1) supérieur ou égal à 50%, et ledit polymère P2 ayant un degré de cristallinité (Kc2) inférieur ou égal à 30%, de préférence inférieur ou égal à 5%.

Selon un mode de réalisation la capsule présente une ou plusieurs des caractéristiques suivantes :

- lesdits polyhydroxyalkanoates sont choisis parmi les polymères polyhydroxybutyrate (PHB), de préférence le polymère P1 et/ou le polymère P2 sont des copolymères PHB, et/ou
- le polymère P1 contient des unités monomériques M1a d'hydroxybutyrates 3HB et des unités monomériques M1b choisis parmi le hydroxyvalérate HV, le 3-hydroxyhexanoate HH ou le 4hydroxy-butyrate 4HB, M1a étant différent de M1b, et/ou le polymère P2 contient des unités monomériques M2a d'hydroxybutyrates 3HB et des unités monomériques M2b choisis parmi l'hydroxyvalérate HV, le 3-hydroxyhexanoate HH ou le 4hydroxy-butyrate 4HB, M2a étant différent de M2b, de préférence le ratio massique M1b/M1a est inférieur ou égal à 0,07, de préférence inférieur ou égal à 0,6 et/ou le ratio massique M2b/M2a est supérieur ou égal à 0,05, de préférence va de 0,1 à 1, de préférence encore de 0,2 à 0,9, et/ou
- le polymère P1 et/ou le polymère P2 sont obtenus par génie fermentaire aérobie et/ou anaérobie de manière biosourcée et/ou
- le ou les polymères P1 représentent de 70 à 99% en poids, de préférence de 80 à 98% en poids, du poids total des polymères P1 et P2 et/ou le ou les polymères P2 représentent de 1 à 30% en poids, de préférence de 2 à 20% en poids, de préférence encore de 3 à 10% en poids, du poids total des polymères P1 et P2, et/ou
- la formulation comprend de 50 à 99,9% en poids, de préférence de 75 à 99,5% en poids, avantageusement de 90 à 99% en poids, de polymère(s) P1 et P2, par rapport au poids total de la formulation, et/ou
- la formulation comprend en outre au moins une charge minérale ou organique, de préférence en une proportion allant de 0,1 à 50% en poids, de préférence de 0,5 à 25% en poids, avantageusement de 1 à 15% en poids, de préférence ladite charge est choisie parmi la silice, les silicates, les hydroxydes double laminaire (HDL), l'oxyde de titane, la vitamine E, les protéines animales ou végétales plastifiées, ou leurs mélanges, par rapport au poids total de la formulation, et/ou
- la surface spécifique BET des silicates est comprise entre 1 et 250$m^2$/g et/ou le diamètre médian des silicates est compris entre 0,5 à 20$\mu$m et/ou le facteur de forme dimensionnelle des silicates est supérieur ou égal à 1:2, et/ou
- la formulation comprend en outre au moins un alcool polyvinylique ou éthylène vinylique, de préférence en une quantité allant de 1 à 30% en poids, de préférence de 2 à 20% en poids, avantageusement de 5 à 10% en poids, par rapport au poids total de la formulation, et/ou
- ladite capsule :
  - est biodégradable et/ou compostable en condition industrielle ou domestique ou par méthanisation et/ou
  - contient au moins 80% en poids de carbone biosourcé, par rapport au poids total des atomes de carbone de la capsule, et/ou
- l'enceinte comporte un fond et le fond, la paroi latérale et le rebord circulaire sont formés par moulage par injection ou par thermoformage, de préférence en une seule couche de ladite formulation dans un moule, et/ou
- la capsule contient une substance sous forme de poudre ou liquide, ladite capsule comprenant un opercule soudé sur le pourtour du rebord de l'enceinte, de préférence l'opercule comprend un film monocouche ou multicouche, ledit film comprenant un ou plusieurs matériaux choisi(s) parmi des matériaux biodégradables et compostable selon un processus biologique aérobie et/ou méthanisable selon un processus biologique anaérobie, de préférence le matériau est choisi parmi le papier, les non-tissés, la cellulose, les couches SiOx, les polymères à base d'acide polylactique, les polyhydroxyalcanoates, les couches hybrides polymère organique et fibres inorganiques, les couches enduites d'alcool polyvinylique ou de copolymère d'éthylène et d'alcool vinylique, les couches métallisées de préférence à l'aide d'aluminium, ces couches de matériaux étant éventuellement séparées par une couche de colle, et/ou
- l'opercule est constitué d'un film multicouche comprenant :

  i) un film de papier ou papier filtre,
  ii) une couche barrière, de préférence la couche barrière comprenant une ou plusieurs couches choisie(s) parmi :

- une couche barrière hybride comprenant un polymère organique et des composés inorganiques, et/ou
- une coche barrière SiOx, et/ou
- une couche barrière de cellulose,

iii) une couche de non-tissé, ladite couche de non-tissé étant à l'intérieur de la capsule, et/ou

- l'opercule est constitué d'un film multicouche comprenant :

i) une couche barrière,
ii) un film à base de biopolymères tel que les polyhydroxyalcanoates PHA ou les polybutylenadipate-terephthalate PBAT ou les polybutylensuccinate PBS ou les polybutylene-co aliphate co-téréphtalate PBAIT ou encore les acides polylactiques PLA,

Ou d'un film multicouche comprenant :

i) un film à base de biopolymères tel que les polyhydroxyalcanoates PHA ou les polybutylenadipate-terephthalate PBAT ou les polybutylensuccinate PBS ou les polybutylene-co aliphate co-téréphtalate PBAIT ou encore les acides polylactiquesPLA,
ii) une couche barrière,
iii) un film à base de biopolymères tel que les polyhydroxyalcanoates PHA ou les polybutylene co-adipate co-terephthalate PBAT ou les polybutylene succinate PBS ou les polybutylene co-aliphate-co téréphtalate PBAIT ou encore les acides polylactiques PLA.

L'invention concerne en outre un procédé de fabrication d'une capsule selon l'invention, ledit procédé comprenant les étapes suivantes :

a) Préparation de la formulation par mélange des ingrédients, lesdits ingrédients pouvant éventuellement être extrudés,
b) moulage par injection de la formulation obtenue à l'étape a) dans un moule pour former une couche d'au moins la paroi latérale et le rebord circulaire de l'enceinte, éventuellement une ou plusieurs couches de l'enceinte peuvent être moulées par injection, à l'aide d'une formulation différente de la formulation de l'étape a),
c) remplissage de l'enceinte avec la substance sous forme de poudre ou liquide, si le fond n'est pas moulé par injection de la formulation, alors l'étape de remplissage est précédée d'une étape de mise en place d'un fond de type monocouche ou multicouche afin de former l'enceinte,
d) éventuellement, fermeture de l'enceinte à l'aide de l'opercule pour former la capsule,

Ou comprenant les étapes suivantes :

a) Préparation de la formulation par mélange des ingrédients, lesdits ingrédients pouvant éventuellement être extrudés,
b) Fabrication de plaques ou d'un film par extrusion de la formulation avant calandrage ou soufflage, éventuellement fabrication d'une ou plusieurs autres couches d'au moins la paroi latérale et le rebord circulaire de l'enceinte par extrusion à l'aide d'au moins une formulation différente de la formulation de l'étape a), par exemple à l'aide d'une formulation de PVOH ou EVOH,
c) Mise en forme par thermoformage de la plaque ou du film dans une forme appropriée,
d) remplissage de l'enceinte avec la substance sous forme de poudre ou liquide, si le fond n'est pas mis en forme par thermoformage lors de l'étape c), alors l'étape de remplissage est précédée d'une étape de mise en place d'un fond de type monocouche ou multicouche afin de former l'enceinte,
e) éventuellement, fermeture de l'enceinte à l'aide de l'opercule pour former la capsule.

Les capsules selon l'invention comprennent typiquement au moins 60% en poids de carbone d'origine biosourcée. La teneur en carbone d'origine biosourcée peut être déterminée selon la norme EN16640. Selon cette norme, il convient de déterminer, pour la capsule, la fraction de carbone totale, et, au sein de celle-ci, mesurer la part biosourcée exprimée en % (mesure du C14 par la méthode au radiocarbone).
Avantageusement, une capsule selon l'invention comprend au moins 80% en poids de carbone biosourcé, de préférence au moins 90% en poids de carbone biosourcé, par rapport au poids total des atomes de carbone de la capsule.
Les capsules selon l'invention sont stables au stockage. Puisqu'elles présentent une bonne étanchéité à l'oxygène et à la vapeur d'eau, elles peuvent être stockées et conservent le contenu pendant au moins 12 mois avant d'être

consommées.

Les capsules selon l'invention sont compatibles avec les machines Nespresso®. La présente invention est applicable à d'autres formats courants de machines.

Les capsules selon l'invention présentent une fonction barrière, c'est-à-dire qu'elles présentent typiquement une perméabilité à l'oxygène inférieure à 3,5 x $10^{-3}$ $cm^3$/capsule/24hrs à 0,21atm à 23°C et 50%HR (humidité relative), de préférence égale ou inférieure à 3,0 x $10^{-3}$ $cm^3$/capsule/24hrs à 0,21atm à 23°C et 50% HR, de préférence encore égale ou inférieure à 2,90 x $10^{-3}$ $cm^3$/capsule/24hrs à 0,21atm à 23°C et 50% HR, mesurée selon la norme ASTM F1307 ou ISO 15105-2.

En outre, les capsules selon l'invention sont biodégradables, par un compostage industriel et/ou par un compostage domestique, avantageusement elles sont compostables à la fois par un compostage industriel et par un compostage domestique.

Ainsi, les capsules selon l'invention présentent à la fois une fonction barrière aux gaz, notamment à l'oxygène très satisfaisante et de bonnes propriétés mécaniques et thermiques, puisqu'elles sont suffisamment rigides sans être cassantes tout en assurant une qualité constante lors de leur fabrication et utilisation.

D'autres caractéristiques, variantes et avantages de la mise en œuvre de l'invention, ressortiront mieux à la lecture de la description et des exemples qui vont suivre, donnés à titre illustratif et non limitatif de l'invention.

## BREVE DESCRIPTION DES FIGURES

[Fig. 1] est une vue schématique en coupe transversale d'une enceinte mise en œuvre selon l'invention.
[Fig. 2] est une vue schématique en coupe transversale d'une capsule mise en œuvre selon l'invention.
[Fig. 3] est un graphe représentant les écoulements de différentes formulations et de polymères en fonction du temps.

## DESCRIPTION DETAILLEE DE L'INVENTION

La présente invention concerne une capsule selon la revendication 1 et un procédé de fabrication d'une telle capsule selon la revendication 15.

Selon un mode de réalisation, la capsule comprend en outre un opercule situé à l'opposé du fond de cette capsule.

Selon une première variante, le fond est configuré pour être perforé par des lames de la machine de production de café de sorte que les lames fournissent des ouvertures pour l'injection de fluide. Dans ce cas, le fond forme une paroi d'injection par laquelle le fluide est injecté et ce dernier sortira après avoir traversé la substance contenue dans la capsule par l'opercule.

Selon une deuxième variante, la capsule est traversée par les lames de la machine de production de café au niveau de l'opercule qui sert ici comme paroi d'injection et le fluide qui y est injecté sort par le fond.

Selon l'invention, la paroi latérale et le rebord circulaire sont formés par moulage par injection ou par thermoformage .

Selon un premier mode de réalisation, la paroi latérale, le rebord circulaire et le fond sont formés par moulage par injection ou par thermoformage et l'opercule est formé par un film monocouche ou multicouche.

Selon un deuxième mode de réalisation, le fond et l'opercule sont formés par un film monocouche ou multicouche. Dans ce cas, lors du moulage par injection ou du thermoformage, outre la paroi latérale et le rebord circulaire, un support peut également être formé, ce support pourra servir pour soutenir le fond formé par un film monocouche ou multicouche. Ce support pourra avoir par exemple une structure en forme de croix et sera alors obtenu lors du moulage par injection ou du thermoformage.

Dans le cas d'une substance sous forme de poudre, l'extraction de la boisson peut être mise en œuvre à une pression allant de 2 à 20 bars, et par exemple à une température allant de 30 à 100 °C.

Dans le cas d'une substance sous forme de liquide, l'extraction de la boisson peut être mise en œuvre à une pression allant de 2 à 7 bars, et par exemple à température ambiante ou à une température allant de 20 à 45°C.

Selon l'invention, la formulation de la capsule comprend :

(i) au moins un polymère P1 choisi parmi les PHA ; et
(ii) au moins un polymère P2 choisi parmi les PHA,

ledit polymère P1 ayant un degré de cristallinité (Kc1) supérieur ou égal à 50% et
ledit polymère P2 ayant un degré de cristallinité (Kc2) inférieur ou égal à 30 %, avantageusement inférieur ou égal à 15%, encore plus préférentiellement inférieur ou égal à 5 %.

Tel que décrit précédemment, la capsule est typiquement adaptée à être ouverte sur des éléments saillants sous l'effet de la montée en pression quand un fluide y est injecté dans un système de porte-capsule ou, pour d'autres systèmes, pour une ouverture de sortie crées par perforation mécanique de la membrane ou du fond par des pointes.

De préférence, la capsule selon l'invention est constituée d'au moins 85% en poids de matériaux biodégradables et compostable (processus biologique aérobie) et/ou méthanisable (processus biologique anaérobie), de préférence à 100% de matériaux biodégradables et compostable (processus biologique aérobie) et/ou méthanisable (processus biologique anaérobie).

Par « biodégradable », on entend un matériau capable de se décomposer sous l'action d'organismes vivants, tels que des bactéries, des champignons ou des algues, pour se transformer par exemple en dioxyde de carbone, en eau et/ou en méthane.

Par « compostable », on entend un objet fait avec une matière biodégradable capable de se désintégrer sous conditions contrôlées comme, par exemple, celles définies par les normes de compostabilité industrielle et domestique.

Les capsules selon l'invention répondent avantageusement à la norme de compostabilité EN 13432, elles sont alors dites biodégradables en condition de compostage industriel.

La norme EN 13432 spécifie les exigences techniques et les procédures pour déterminer la compostabilité d'un matériau.

La norme EN 13432 définit les caractéristiques qu'un matériau, un produit, doit posséder pour être considéré comme compostable et biodégradable.

La biodégradation peut être testée selon des normes telles que ISO 14855, ISO 17556 ou ISO 14851. Par exemple, l'un de ces tests exige que, pour être considéré comme "industriellement compostable" - au moins 90 % du matériau doit être dégradé biologiquement dans des conditions contrôlées en six mois.

Des tests similaires existent également pour permettre la certification du compostage domestique. Il n'existe pas actuellement de normes internationales ou européennes mais uniquement des normes nationales pour le compostage à domicile. Ainsi, les capsules selon l'invention sont biodégradables en condition de compostage domestique selon les recommandations françaises. En particulier, elles satisfont la norme NF T51-800 (2015), à savoir qu'au moins 90% de la capsule est dégradée biologiquement dans des conditions contrôlées en moins de 365 jours (12 mois maximum) à 25°C +/- 5°C. Les capsules selon l'invention répondront également typiquement à la norme australienne AS 5810 (2010).

La capsule selon l'invention comporte ainsi typiquement une enceinte et un opercule soudé sur le pourtour du rebord de l'enceinte. L'enceinte comporte ainsi un fond et une paroi latérale ayant un rebord circulaire. Le rebord circulaire permet de maintenir la capsule lorsqu'elle est introduite dans une machine ainsi que de créer une zone d'étanchéité lors de son utilisation dans ladite machine, telle qu'une machine à café.

L'enceinte de la capsule est typiquement mise en forme par moulage ou thermoformage en une seule pièce du fond, de la paroi latérale et du rebord circulaire, à partir d'une formulation. Ce moulage ou thermoformage en une seule pièce peut être effectué en une ou plusieurs couches, étant entendu qu'au moins une couche est constituée de la formulation décrite dans l'invention. Lorsqu'il s'agira de deux couches, typiquement, chaque couche sera constituée d'une formulation différente. Par exemple, si le moulage de l'enceinte est effectué en deux couches, il pourrait s'agir d'une couche de la formulation de l'invention et d'une couche barrière constituée par exemple d'alcool polyvinylique (PVOH) ou d'éthylène alcool vinylique (EVOH).

Lorsque qu'il s'agira de trois couches, typiquement, il pourra s'agir d'au moins deux couches différentes, dont au moins une couche sera constituée de la formulation de l'invention. Une des trois couches pourra alors être une couche barrière constituée par exemple de PVOH ou EVOH.

Selon un mode de réalisation préféré, le moulage de l'enceinte est effectué en une seule couche de la formulation.

Selon l'invention, la formulation de la capsule comprend :

(i) au moins un polymère P1 choisi parmi les PHA; et
(ii) au moins un polymère P2 choisi parmi les PHA,

ledit polymère P1 ayant un degré de cristallinité (Kc1) supérieur ou égal à 50% et
ledit polymère P2 ayant un degré de cristallinité (Kc2) inférieur ou égal à 30 %, aventageusement inférieur ou égal à 15%, encore plus préférentiellement inférieur ou égal à 5 %.

Par conséquent, P1 est plutôt cristallin alors que P2 est plutôt faiblement cristallin voire plutôt amorphe.

Les inventeurs ont ainsi découvert que l'efficacité de la couche barrière à l'oxygène et/ou à la vapeur d'eau et la souplesse d'une capsule résultent de la nature des additifs ainsi que de la cristallinité du polymère utilisé notamment lorsqu'il s'agit d'un polymère de la famille des polyhydroxyalkanoate (PHA).

Les inventeurs ont découvert que les propriétés des capsules étaient influencées par le degré de cristallisation de leurs formulations. Ainsi, plus le degré de cristallisation est élevé, plus la pièce moulée sera fragile.

La cristallinité fait référence au degré d'ordre structurel dans un solide et est liée à l'ordre des chaînes

moléculaires du polymère.

Le degré de cristallinité peut être mesuré par une Analyse Thermique Différentielle ou A.T.D ou par calorimétrie différentielle à balayage ou D.S.C. (Differential Scanning Calorimetry en anglais), de préférence il sera mesuré par D.S.C. Elles permettent de déterminer notamment la température de transition vitreuse dite Tg, la température de cristallisation dite Tc et la température de fusion dite Tm du polymère.

Les polymères complètement amorphes ne présentent ni une température de cristallisation, ni une température de fusion, et sont caractérisés thermiquement par DSC uniquement par leur température de transition vitreuse Tg.

Les propriétés des plastiques sont fortement influencées par leur degré de cristallisation. Plus le degré de cristallisation est élevé, plus une pièce moulée est rigide, mais aussi plus fragile. Le degré de cristallisation (aussi appelé taux de cristallinité) est influencé par la structure chimique et l'histoire thermique, telles que les conditions de refroidissement pendant la fabrication ou le traitement post-thermique.

Pour la détermination du degré de cristallisation Kc du polymère Pi, l'enthalpie de fusion mesurée par DSC(ΔHmes) du polymère Pi est comparée à la valeur de la littérature (ΔHlit) pour un polymère complétement cristallin.

Ainsi,

$$[\text{Math 1}]\ Kc = \Delta Hmes / \Delta Hlit.$$

Il existe des bases de données dans la littérature, notamment des articles scientifiques décrivant l'enthalpie de fusion de divers polymères complètement cristallin. Ainsi, l'homme du métier a accès à l'enthalpie de fusion de polymères complètement cristallin, notamment ceux de type PHA, en particulier de type PHB.

L'enthalpie de fusion ΔHlit d'un polymère PHB de type PHBH ou PHBV complètement cristallin est de 146J/g comme rapporté dans Vorleak Chea et al. J. APPL. POLYM. SCI. 2015, DOI: 10.1002/APP.41850 ou dans Zonglin Li et al. Polymers 2020, 12, 1300; doi:10.3390/polym12061300 ou encore dans Sunny Modi et al. European Polymer Journal 47 (2011) 179 - 186.

Pour un polymère amorphe, il n'y a pas de pic de fusion, de sorte que l'enthalpie de fusion sera de zéro. A titre d'exemple, l'enthalpie de fusion d'un polymère de type P3HB4HB est proche de zéro.

Le degré de cristallinité a une influence significative sur la dureté, la densité, la transparence et la diffusion, donc les propriétés barrière aux gaz.

Par « polymère », il est entendu dans la présente demande un homopolymère et/ou un copolymère.

Le polymère P1 est un polymère plutôt cristallin. La formulation selon l'invention peut comprendre un ou plusieurs polymères P1 cristallins.

Par polymère « plutôt cristallin », il est entendu par la présente invention que le polymère a un degré de cristallinité Kc1 supérieur ou égal à 50%.

Le polymère P2 est un polymère faiblement cristallin voire plutôt amorphe. La formulation selon l'invention peut comprendre un ou plusieurs polymères P2 faiblement cristallin voire amorphes.

Par polymère « faiblement cristallin », il est entendu par la présente invention que le polymère a un degré de cristallinité Kc2 allant de 5% à 49%.

Par polymère « plutôt amorphe », il est entendu par la présente invention que le polymère a un degré de cristallinité Kc2 inférieur ou égal à 5%.

Le polymère P1 plutôt cristallin présente une température de fusion. Lorsque le polymère P2 est amorphe, il ne présente pas de température de fusion.

Selon un mode de réalisation, la température de transition vitreuse Tg des polymères cristallins P1 mis en œuvre dans l'invention est supérieure à -10°C, de préférence va de -5 à 5 °C (mesurée en DSC avec une rampe de température de +10°C/min).

Selon un mode de réalisation, la température de transition vitreuse Tg des polymères amorphes P2 mis en œuvre dans l'invention est inférieure à -10 °C, de préférence va de -20°Cà -10°C (mesurées en DSC avec une rampe de température de +10°C/min).

Selon un mode de réalisation, la température de fusion des polymères cristallins P1 mis en œuvre selon l'invention va de 120°C à 200°C (mesurée en DSC avec une rampe de température de +10°C/min).

Selon un mode de réalisation de l'invention, la formulation comprend de la silice ($SiO_2$) et/ou du dioxyde de titane ($TiO_2$). Le $SiO_2$ et/ou le $TiO_2$ jouent un rôle dans la fonction barrière mais aussi sont des agents de nucléation. La silice (SiO2) présente une taille de particules strictement supérieure à 100 nm, plus préférentiellement strictement inférieure à 500 nm. Le $TiO_2$ présente une taille de particules strictement supérieure à 460 nm, plus préférentiellement strictement supérieure à 460 nm et strictement inférieure à 3900 nm.

Par « taille de particules », il est entendu le diamètre médian mesurée par exemple en granulométrie laser.

Typiquement, tous les ingrédients de la formulation sont biodégradables.

Selon un mode de réalisation, les PHA sont choisis parmi les polymères de la famille des PHB (poly(hydroxybutyrate)).

Dans le cadre de la présente invention, un « polymère de la famille des PHB » désigne un polymère comportant au moins un motif de répétition de formule $-(O-CH(CH_3)-CH_2CO)-$.

Selon un mode de réalisation, les PHA sont choisis parmi les polymères poly3-hydroxybutyrate-co-3-hydroxyhexanoate (PHBH), les polymères polyhydroxybutyrate/hydroxyvalérate (PHBV), les polymères poly3-hydroxybutyrate 4-hydroxybutyrate (P3HB4HB), et leurs mélanges.

Le polymère PHBH comporte des unités monomériques 3-hydroxybutyrate (3HB) des unités monomériques 3-hydroxyhexanoate(3HH).

L'unité monomérique 3HB répond à la formule (1) :

[Chem 1]

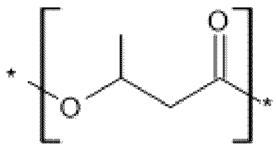

L'unité monomérique 3HH répond à la formule (2) :

[Chem 2]

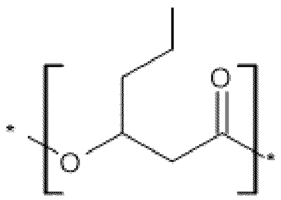

Le polymère PHBV comporte des unités monomériques 3-hydroxybutyrate (3HB) et des unités monomériques hydroxyvalérate(HV).

L'unité monomérique HV répond à la formule (3) :

[Chem 3]

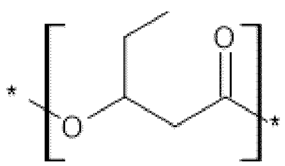

Le polymère P3HB4HB comporte des unités monomériques 3-hydroxybutyrate (3HB) et des unités monomériques 4-hydroxybutyrate (4HB).

L'unité monomérique 4HB répond à la formule (4) :

[Chem 4]

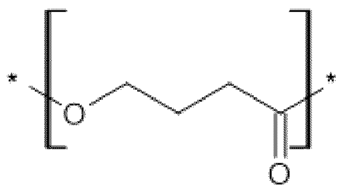

De préférence, dans la formulation selon l'invention, lorsqu'il est présent, le polymère PHBV est un polymère plutôt cristallin et lorsqu'ils sont présents, les polymères PHBH et P3HB4HB sont des polymères faiblement cristallins

voire amorphes.

Selon un mode de réalisation, le polymère P1 est un polymère obtenu par génie fermentaire aérobie et/ou anaérobie de matière biosourcée.

Selon un mode de réalisation, le polymère P1 contient des unités monomériques M1a d'hydroxybutyrates 3HB et des unités monomériques M1b choisis parmi soit le hydroxyvalérate HV soit le 3-hydroxyhexanoate HH ou soit le 4hydroxy-butyrate 4HB, M1a étant différent de M1b.

De préférence, les unités monomériques M1b représentent moins de 5% en poids, de préférence moins de 3% en poids, voire moins de 1% en poids, du poids total des unités monomériques M1a et M1b.

Selon un mode de réalisation, le polymère P2 est un polymère obtenu par génie fermentaire aérobie et/ou anaérobie de matière biosourcée.

Selon un mode de réalisation, le polymère P2 contient des unités monomériques M2a d'hydroxybutyrates 3HB et des unités monomériques M2b choisis parmi soit l'hydroxyvalérate HV soit le 3-hydroxyhexanoate HH ou soit le 4hydroxy-butyrate 4HB, M2a étant différent de M2b.

De préférence, les unités monomériques M2b représentent au moins 5% en poids, de préférence au moins 20% en poids, voire au moins 30% en poids, du poids total des unités monomériques M2a et M2b.

Selon un mode de réalisation, le ratio massique M1b/M1a est inférieur ou égal à 0,07, de préférence inférieur ou égal à 0,6 et/ou le ratio massique M2b/M2a est supérieur ou égal à 0,05, de préférence va de 0,1 à 1, de préférence encore de 0,2 à 0,9.

De préférence, les polymères P1 et P2 ne comprennent pas d'unités monomériques différents des PHAs, de préférence les polymères P1 et P2 ne comprennent pas d'unités monomériques différents des unités monomériques provenant de M1a, M1b, M2a et M2b, respectivement.

Les polymères P1 et P2 sont disponibles commercialement ou peuvent être préparés selon des procédés connus de l'homme du métier.

Selon un mode de réalisation, le ou les polymères P1 représentent de 70 à 99% en poids, de préférence de 80 à 98% en poids, de préférence encore de 85 à 97% en poids, du poids total des polymères P1 et P2.

Selon un mode de réalisation, le ou les polymères P2 représentent de 1 à 30% en poids, de préférence de 2 à 20% en poids, de préférence encore de 3 à 15% en poids, du poids total des polymères P1 et P2.

Selon un mode de réalisation, la formulation comprend de 50 à 99,9% en poids, de préférence de 75 à 99,5% en poids, avantageusement de 90 à 99% en poids, de polymère(s) P1 et P2, par rapport au poids total de la formulation, P1 et P2 étant de préférence choisis parmi les polymères PHBV et les polymères P3HB4HB, le polymère PHBV étant de préférence un polymère cristallin et le polymère P3HB4BH étant de préférence un polymère amorphe.

Selon un mode de réalisation, la formulation comprend en outre (iii) au moins une charge minérale ou organique, de préférence choisie(s) parmi la silice, les silicates, les vitamines (de préférence la vitamine E), les peroxydes, les cires végétales ou animales, les protéines animales ou végétales plastifiées, ou leurs mélanges, de préférence parmi la silice, les silicates la vitamine E, les protéines animales ou végétales plastifiées, ou leurs mélanges.

La ou les charges minérales ou organiques peuvent représenter par exemple de 0,5 à 25% en poids, avantageusement de 1 à 15% en poids, du poids total de la formulation.

Selon un mode de réalisation, les silicates sont choisis parmi les silicates d'aluminium, les silicates d'aluminium et de magnésium, de préférence parmi les silicates d'aluminium ou encore les HDL (hydroxydes doubles lamellaires).

Parmi les silicates d'aluminium et de magnésium, on peut citer les montmorillonites.

Selon un mode de réalisation, les silicates sont choisis parmi les phyllosilicates, de préférence les phyllosilicates d'aluminium.

Selon un mode de réalisation, les phyllosilicates sont choisis parmi les kaolinites, les halloysites, et leur mélange.

Selon un mode de réalisation, les silicates d'aluminium sont des kaolins.

Selon un mode de réalisation, les silicates, de préférence les silicates d'aluminium, présentent une taille de particules d'un diamètre médian mesurée par granulométrie laser allant 0,5 $\mu$m à 20 $\mu$m, et/ou une surface spécifique (mesurée par la méthode Brunauer, Emmett et Teller dite BET) allant de 1 à 250 $m^2$/g.

Typiquement, ces silicates possèdent des facteurs de forme dimensionnelle supérieurs ou égaux à 1:2, avantageusement supérieurs ou égaux à 1:4, et particulièrement supérieurs ou égaux à 1:6, on pourra alors parler de forme aciculaire. Le facteur de forme peut être déterminé par microscopie, par exemple par microscopie électronique à balayage (MEB). Ces charges aciculaires s'orientent préférentiellement lors de l'injection de la capsule dans le sens de l'écoulement, et par conséquent, parallèlement à la surface des parois de la capsule et permettent :

- un renfort mécanique dans le sens long (moins d'écrasement de la capsule), et
- une augmentation de la tortuosité de la matrice polymère apportée par la présence de particules de forme aciculaire apportant un effet barrière supplémentaire

Selon un mode de réalisation, les silicates, typiquement de forme aciculaire, présenteront une voire deux

dimensions nanométriques (de 1 nm à 100 nm), étant entendu que ces silicates comprennent au moins une dimension micrométrique (de 1μm à moins de 1 mm), ceci afin de respecter les normes relatives au contact alimentaire. Ce dimensionnement nano/micro permettra d'introduire une quantité moins élevée de silicates, comparativement à un carbonate ou talc micrométrique et possède au moins 2 avantages :

- un allègement en poids de la pièce finie, tout en améliorant l'effet barrière à l'$O_2$ de la matière
- une augmentation de la résistance à la contrainte de la capsule ainsi que le module de Young.

Selon un mode de réalisation, la formulation comprend :

- de 50 à 99,9% en poids, de préférence de 75 à 99,5% en poids, avantageusement de 90 à 99% en poids, de polymère(s) P1 et P2,
- de 0,1 à 50% en poids, de préférence de 0,5 à 25% en poids, avantageusement de 1 à 15% en poids, d'ingrédient(s) choisi(s) parmi les silicates, la vitamine E, les protéines végétales ou animales plastifiées, ou leurs mélanges,

par rapport au poids total de la formulation.

Selon un mode de réalisation, la formulation comprend :

- de 50 à 99,9% en poids, de préférence de 75 à 99,5% en poids, avantageusement de 90 à 99% en poids, de polymère(s) P1 et P2,
- de 0,1 à 50% en poids, de préférence de 0,5 à 25% en poids, avantageusement de 1 à 15% en poids, d'ingrédient(s) choisi(s) parmi les silicates, la vitamine E, ou leurs mélanges,

par rapport au poids total de la formulation.

Selon un mode de réalisation, la formulation comprend :

(i) de 50 à 98% en poids, de préférence de 75 à 95% en poids, avantageusement de 80 à 90% en poids, de polymère(s) P1,
(ii) de 0,5 à 20% en poids, de préférence de 1 à 15% en poids, avantageusement de 2 à 10% en poids, de polymère(s) P2,
(iii) de 0,1 à 50% en poids, de préférence de 0,5 à 25% en poids, avantageusement de 1 à 15% en poids, de charges minérales ou organiques,

par rapport au poids total de la formulation.

Selon un mode de réalisation, la formulation comprend :

(i) de 50 à 98% en poids, de préférence de 75 à 95% en poids, avantageusement de 80 à 90% en poids, de polymère(s) P1, P1 comportant des unités monomériques M1a d'hydroxybutyrates 3HB et des unités monomériques M1b choisis parmi soit l'hydroxyvalérate (HV) soit le 3-hydroxyhexanoate (HH) ou soit le 4hydroxy-butyrate (4HB),
(ii) de 0,5 à 20% en poids, de préférence de 1 à 15% en poids, avantageusement de 2 à 10% en poids, de polymère(s) P2, P2 comportant des unités monomériques M2a d'hydroxybutyrate (3HB) et des unités monomériques M2b choisis parmi soit l'hydroxyvalérate (HV) soit le 3-hydroxyhexanoate (HH) ou soit le 4hydroxy-butyrate (4HB), (iii) de 0,1 à 50% en poids, de préférence de 0,5 à 25% en poids, avantageusement de 1 à 15% en poids, de charges minérales ou organiques,

par rapport au poids total de la formulation,
P1 et P2 étant avantageusement obtenus par génie fermentaire aérobie et/ou anaérobie de matière biosourcée.

Selon un mode de réalisation, la formulation comprend :

(i) de 50 à 98% en poids, de préférence de 75 à 95% en poids, avantageusement de 80 à 90% en poids, de polymère(s) P1,
(ii) de 0,5 à 20% en poids, de préférence de 1 à 15% en poids, avantageusement de 2 à 10% en poids, de polymère(s) P2,
(iii) de 0,1 à 50% en poids, de préférence de 0,5 à 25% en poids, avantageusement de 1 à 15% en poids, de charges minérales ou organiques choisi(s) parmi les silicates, la vitamine E, ou leurs mélanges,

par rapport au poids total de la formulation.

Selon un mode de réalisation, la formulation comprend par rapport au poids total de la formulation :

(i) de 50 à 98% en poids, de préférence de 75 à 95% en poids, avantageusement de 80 à 90% en poids, de polymère(s) P1, P1 comportant des unités monomériques M1a d'hydroxybutyrates 3HB et des unités monomériques M1b choisis parmi soit l'hydroxyvalérate (HV) soit le 3-hydroxyhexanoate (HH) ou soit le 4hydroxy-butyrate (4HB), le monomère M1b représentant moins de 5% en poids, de préférence moins de 3% en poids, voire moins de 1% en poids, du poids total des monomères M1a et M1b,
(ii) de 0,5 à 20% en poids, de préférence de 1 à 15% en poids, avantageusement de 2 à 10% en poids, de polymère(s) P2, P2 comportant des unités monomériques M2a d'hydroxybutyrate (3HB) et des unités monomériques M2b choisis parmi soit l'hydroxyvalérate (HV) soit le 3-hydroxyhexanoate (HH) ou soit le 4hydroxy-butyrate (4HB), le monomère M2b représentant au moins 5% en poids, de préférence au moins 20% en poids, voire au moins 30% en poids, du poids total des monomères M2a et M2b,
(iii) de 0,1 à 50% en poids, de préférence de 0,5 à 25% en poids, avantageusement de 1 à 15% en poids, de charges minérales ou organiques ou organiques choisi(s) parmi les silicates, la vitamine E, ou leurs mélanges,

P1 et P2 étant avantageusement obtenus par génie fermentaire aérobie et/ou anaérobie de matière biosourcée.
Selon un mode de réalisation, la formulation comprend par rapport au poids total de la formulation :

(i) de 50 à 98% en poids, de préférence de 75 à 95% en poids, avantageusement de 80 à 90% en poids, de polymère(s) P1, P1 comportant des unités monomériques M1a d'hydroxybutyrates 3HB et des unités monomériques M1b choisis parmi soit l'hydroxyvalérate (HV) soit le 3-hydroxyhexanoate (HH) ou soit le 4hydroxy-butyrate (4HB), le monomère M1b représentant moins de 5% en poids, de préférence moins de 3% en poids, voire moins de 1% en poids, du poids total des monomères M1a et M1b,
(ii) de 0,5 à 20% en poids, de préférence de 1 à 15% en poids, avantageusement de 2 à 10% en poids, de polymère(s) P2, P2 comportant des unités monomériques M2a d'hydroxybutyrate (3HB) et des unités monomériques M2b choisis parmi soit l'hydroxyvalérate (HV) soit le 3-hydroxyhexanoate (HH) ou soit le 4hydroxy-butyrate (4HB), le monomère M2b représentant au moins 5% en poids, de préférence au moins 20% en poids, voire au moins 30% en poids, du poids total des monomères M2a et M2b,
(iii) de 0,1 à 50% en poids, de préférence de 0,5 à 25% en poids, avantageusement de 1 à 15% en poids, de silicates d'aluminium,

par rapport au poids total de la formulation,
P1 et P2 étant avantageusement obtenus par génie fermentaire aérobie et/ou anaérobie de matière biosourcée.
Selon un mode de réalisation, la formulation comprend :

- de 50 à 98,9% en poids, de préférence de 75 à 97,5% en poids, avantageusement de 80 à 94% en poids, de polymère(s) choisi(s) parmi les polymères PHBV et les polymères P3HB4HB, le polymère PHBV étant un polymère plutôt cristallin et le polymère P3HB4BH étant un polymère plutôt amorphe,
- de 0,1 à 40% en poids, de préférence de 0,5 à 25% en poids, avantageusement de 1 à 15% en poids, d'ingrédient(s) choisi(s) parmi les silicates d'aluminium, les protéines végétales ou animales plastifiées, la vitamine E, ou leurs mélanges,
- éventuellement de 1 à 30% en poids, de préférence de 2 à 20% en poids, avantageusement de 5 à 10% en poids, de PVOH ou EVOH par rapport au poids total de la formulation,

P1 et P2 étant avantageusement obtenus par génie fermentaire aérobie et/ou anaérobie de matière biosourcée.
Selon un mode de réalisation, la formulation comprend :

- de 50 à 98,9% en poids, de préférence de 75 à 97,5% en poids, avantageusement de 80 à 94% en poids, de polymère(s) choisi(s) parmi les PHBV et les P3HB4HB, le polymère PHBV étant un polymère plutôt cristallin et le polymère P3HB4BH étant un polymère plutôt amorphe,
- de 0,1 à 40% en poids, de préférence de 0,5 à 25% en poids, avantageusement de 1 à 15% en poids, de silicates d'aluminium,
- éventuellement de 1 à 30% en poids, de préférence de 2 à 20% en poids, avantageusement de 5 à 10% en poids, de PVOH ou EVOH,

par rapport au poids total de la formulation,
**[0118]** P1 et P2 étant avantageusement obtenus par génie fermentaire aérobie et/ou anaérobie de matière biosourcée.
Lorsque la formulation comprend une charge minérale ou organique choisie parmi la silice, les silicates, la vitamine E ou une protéine animale ou végétales plastifiées, la formulation peut éventuellement en outre comprendre un ou plusieurs additifs choisis parmi les charges minérales différentes des silicates, les produits type peroxyde, des

vitamines différentes de la vitamine E, des cires végétales ou animales. Selon ce mode de réalisation, ledit ou lesdits additifs peut représenter de 0,05 à 20% en poids, de préférence de 0,1 à 15% en poids, avantageusement de 1 à 10% en poids, du poids total de la formulation.

De préférence, la formulation est constituée entièrement de matériaux biodégradables et compostables (processus biologique aérobie) et/ou méthanisable (processus biologique anaérobie).

La formulation mise en œuvre dans l'invention est typiquement réalisée par extrusion, de préférence par extrusion bi-vis. Une formulation sous forme de granules peut alors être obtenue.

Typiquement, la capsule répond à la norme **EN** 13432 en vigueur depuis 2002.

La méthanisation est une technologie basée sur la dégradation par des micro-organismes de la matière organique, en conditions contrôlées et en l'absence d'oxygène, donc en milieu anaérobie, contrairement au compostage qui est une réaction aérobie.

Typiquement, lors de son utilisation, la capsule contenant au moins une substance sous forme de poudre ou de liquide pour la préparation d'une boisson est insérée dans un porte-capsule d'une machine de préparation de boissons, avant de fermer le porte-capsule et démarrer la préparation de la boisson.

La capsule contient une substance sous forme de poudre ou liquide pour la préparation d'une boisson. La boisson sera de préférence du café, du thé, un produit chocolaté, de préférence du café. La substance sous forme de poudre permettant de préparer du café pourra être du café torréfié et moulu, du café soluble ou un mélange de ceux-ci.

La capsule selon l'invention peut être préparée selon le procédé suivant :

a) Préparation de la formulation par mélange des ingrédients, lesdits ingrédients pouvant éventuellement être extrudés ;

b) moulage par injection de la formulation dans un moule pour former une couche d'au moins la paroi latérale et le rebord circulaire de l'enceinte, de préférence du fond, de la paroi latérale et du rebord circulaire de l'enceinte, éventuellement une ou plusieurs autres couches de l'enceinte peuvent être moulées par injection, à l'aide typiquement d'au moins une formulation différente de la formulation de l'étape a), par exemple à l'aide d'une formulation de PVOH ou EVOH,

c) éventuellement remplissage de l'enceinte avec la substance sous forme de poudre ou liquide, si le fond n'est pas moulé par injection de la formulation, alors l'étape de remplissage est précédée d'une étape de mise en place d'un fond de type monocouche ou multicouche afin de former une enceinte,

d) éventuellement fermeture de l'enceinte à l'aide de l'opercule pour former la capsule.

Alternativement, la capsule selon l'invention peut être préparée selon le procédé suivant :

a) préparation de la formulation par mélange des ingrédients, lesdits ingrédients pouvant éventuellement être extrudés ;

b) fabrication de plaques ou film par extrusion de la formulation avant calandrage ou soufflage, éventuellement fabrication d'une ou plusieurs autres couches d'au moins la paroi latérale et le rebord circulaire de l'enceinte par extrusion à l'aide d'au moins une formulation différente de la formulation de l'étape a), par exemple à l'aide d'une formulation de PVOH ou EVOH,

c) mise en forme d'au moins la paroi latérale et le rebord circulaire de l'enceinte par thermoformage de la plaque sur ou dans une forme appropriée

d) éventuellement remplissage de l'enceinte avec la substance sous forme de poudre ou liquide, si le fond n'est pas fabriqué par thermoformage lors de l'étape c), alors l'étape de remplissage est précédée d'une étape de mise en place d'un fond de type monocouche ou multicouche afin de former une enceinte,

e) éventuellement fermeture de l'enceinte à l'aide de l'opercule pour former la capsule.

De préférence, le procédé de préparation comprend une seule étape de moulage par injection ou par thermoformage à l'aide de la formulation définie dans l'invention. L'enceinte selon l'invention sera alors, selon ce mode de réalisation, constituée d'une seule couche de formulation définie dans l'invention.

L'enceinte présente généralement une épaisseur allant de 0,2 à 1 mm, de préférence de 0,3 à 0,8 mm. Le fond de l'enceinte est apte à être perforée et peut éventuellement comprendre un renfoncement.

Le rebord circulaire est formé lors de la réalisation de l'enceinte par injection thermoplastique dans un moule présentant la forme appropriée. Ledit rebord circulaire peut présenter une largeur allant de 1 à 4 mm. Le rebord circulaire a principalement pour fonction de venir buter contre une bordure d'un porte-capsule de l'appareil de confection de boisson lors de la phase d'extraction de la boisson, par exemple du café, et ainsi permettre le maintien ferme de la capsule lors de la montée en pression.

Le moule pour l'injection ou la forme pour le thermoformage, comprendra typiquement ainsi un fond ou un support, une paroi latérale et un rebord circulaire, ceci afin d'obtenir chacune des couches de l'enceinte, de préférence

l'enceinte sera constituée d'une unique couche de la formulation de l'invention.

Selon un premier mode de réalisation, la paroi latérale, le rebord circulaire et le fond sont formés par moulage par injection ou par thermoformage et l'opercule est formé par un film monocouche ou multicouche. Selon ce premier mode de réalisation, le moule comprendra un fond, une paroi latérale et un rebord circulaire.

Selon un deuxième mode de réalisation, un support, la paroi latérale et le rebord circulaire sont formés par moulage par injection ou par thermoformage et l'opercule et le fond sont formés par un film monocouche ou multicouche. Selon ce deuxième mode de réalisation, le moule comprendra un support (par exemple en forme de croix), une paroi latérale et un rebord circulaire.

L'opercule présente typiquement une dimension calibrée de façon à venir épouser le contour du rebord circulaire de l'enceinte de la capsule, fermant ainsi l'enceinte.

La substance sous forme de poudre, de préférence du café moulu, ou de liquide se retrouve donc emprisonné dans l'enceinte creuse. Typiquement, l'opercule sera encollé ou thermo-soudé au rebord circulaire de l'enceinte de la capsule.

Selon un mode de réalisation, l'opercule est constitué d'un film biodégradable et compostable (processus biologique aérobie) et/ou méthanisable (processus biologique anaérobie). Typiquement, l'opercule pourra être un film monocouche ou multicouche d'une épaisseur totale allant de 90 à 300 $\mu$m.

L'opercule peut ainsi être constitué d'une ou plusieurs couches de matériaux choisies parmi le papier, les non-tissés, la cellulose, les couches barrières, ces couches de matériaux pouvant être séparées par une couche de colle, qui serait elle-même biodégradable et compostable (processus biologique aérobie) et/ou méthanisable (processus biologique anaérobie).

Parmi les non-tissés, on peut citer les non-tissés acide polylactique (PLA) ou les non-tissés polyhydroxyalcanoate (PHA) ou polybutylensuccinate (PBS) ou polybutylenadipat-terephthalate (PBAT) ou polybutylene-co aliphate co téréphtalate (PBAIT), le di-acide aliphatique pouvant être, par exemple, l'acide sébacique.

Parmi les couches barrières, on peut citer les couches SiOx ou $Al_2O_3$, les PLA, les couches hybrides polymère organique et fibres inorganiques, les couches enduites de PVOH (alcool polyvinylique) ou EVOH (copolymère d'éthylène et d'alcool vinylique), les couches métallisées par exemple à l'aide d'aluminium, les couches barrière réalisées par vaporisation (dépôt plasma ou par vide d'air).

Par « barrière », on entend la faculté d'un matériau à permettre de limiter ou réduire le passage de l'oxygène et/ou de la vapeur d'eau ou humidité, on pourra alors parler de couche barrière à l'oxygène et/ou à l'humidité. Parmi les couches hybride polymère organique et composés inorganiques, on peut citer les couches comprenant des polycondensats d'acide silicique modifiés par des groupements organiques et des composés inorganiques. Parmi les groupements organiques, on peut citer les polycaprolactone, les chitosan, les celluloses. Le polycondensat d'acide silicique contient des liaisons Si-O-Si. Parmi les composés inorganiques, on peut citer les cations de silicium éventuellement en combinaison avec d'autres cations tels que l'aluminium, le titane, le bore ou le zirconium.

A titre d'exemples de réalisation de l'opercule, on peut citer :

- un opercule constitué de :

  i) un film à base de papier sulfurisé ou papier filtre
  ii) une couche de colle et/ou une couche barrière,
  iii) une couche de non-tissé,

  une fois mise en œuvre dans la capsule, la couche i) est la couche extérieure et la couche iii) est la couche à l'intérieur de la capsule ;
- un opercule constitué de :

  i) un film à base de papier filtre,
  ii) une couche barrière,
  iii) un film barrière tel qu'un film de cellulose ou film PLA ou film PHA,
  iv) une couche de non-tissé,

  une fois mise en œuvre dans la capsule, la couche i) est la couche extérieure et la couche iv) est la couche à l'intérieur de la capsule ;
- un opercule constitué de :

  i) un film de cellulose ou acétate de cellulose par exemple de type Naturflex®,
  ii) une couche de non-tissé, une fois mise en œuvre dans la capsule, la couche i) est la couche extérieure et la couche ii) est la couche à l'intérieur de la capsule ;

- un opercule constitué de :

i) un film de papier ou papier filtre,
ii) une couche barrière hybride polymère organique et composés inorganiques,
iii) une couche barrière SiOx ou $Al_2O_3$,
iv) un film barrière cellulose,
v) une couche de non-tissé,

une fois mise en œuvre dans la capsule, la couche i) est la couche extérieure et la couche v) est la couche à l'intérieur de la capsule.
- un opercule constitué de :

i) un film à base de biopolyère tel que PHA ou PBAT ou PBS ou polybutylene-co aliphate co téréphtalate (PBAIT), le diacide aliphatique pouvant être, par exemple, l'acide sébacique ou encore PLA,
ii) une couche barrière,
iii) un film à base de biopolymère tel que PHA ou PBAT ou PBS ou PBAIT ou encore PLA,

une fois mise en œuvre dans la capsule, la couche i) est la couche extérieure et la couche iii) est la couche à l'intérieur de la capsule
- un opercule constitué de :

i) une couche barrière,
ii) un film à base de biopolymère tel que PHA ou PBAT ou PBS ou polybutylene-co aliphate co téréphtalate (PBAIT), le diacide aliphatique pouvant être, par exemple, l'acide sébacique ou encore PLA,

une fois mise en œuvre dans la capsule, la couche i) est la couche extérieure et la couche ii) est la couche à l'intérieur de la capsule.

En faisant référence à la Fig. 1, une enceinte 2 selon l'invention est constituée d'un fond 3 de forme sensiblement circulaire et d'une paroi latérale 4 munie d'un rebord circulaire 5.
En faisant référence à la Fig. 2, une capsule 1 selon l'invention comprend une enceinte et un opercule 6. L'enceinte est constituée d'un fond 3 de forme sensiblement circulaire et d'une paroi latérale 4 munie d'un rebord circulaire 5. La capsule selon l'invention comprend en outre une substance sous forme de poudre ou liquide pour la préparation d'une boisson (introduite avant fermeture de la capsule à l'aide de l'opercule) qui n'a pas été représentée sur la Fig. 2.
L'invention concerne également un procédé de fabrication d'une capsule selon l'invention.
Selon un premier mode de réalisation, le procédé de l'invention comprend les étapes :

a) Préparation de la formulation par mélange des ingrédients, lesdits ingrédients pouvant éventuellement être extrudés ;
b) moulage par injection de la formulation dans un moule pour former une couche d'au moins la paroi latérale et du rebord circulaire de l'enceinte, éventuellement fabrication d'une ou plusieurs autres couches d'au moins la paroi latérale et du rebord circulaire de l'enceinte par extrusion à l'aide d'au moins une formulation différente de la formulation de l'étape a), par exemple à l'aide d'une formulation de PVOH ou EVOH,
c) éventuellement, remplissage de l'enceinte avec la substance sous forme de poudre,
d) éventuellement, fermeture de l'enceinte à l'aide de l'opercule pour former la capsule.

Lorsque le fond n'est pas un film monocouche ou multicouche, l'étape b) du procédé de fabrication comprend de préférence une étape de moulage par injection de la formulation dans un moule pour former une couche de l'enceinte comportant un fond, une paroi latérale et un rebord circulaire.
Lorsque le fond est un film monocouche ou multicouche, l'étape b) du procédé de fabrication comprend de préférence une étape de moulage par injection de la formulation dans un moule pour former une couche de l'enceinte comportant un support (par exemple une structure en croix), une paroi latérale et un rebord circulaire.
Alternativement, le procédé de l'invention comprend les étapes :

a) préparation de la formulation par mélange des ingrédients, lesdits ingrédients pouvant éventuellement être extrudés,
b) fabrication de plaques ou film par extrusion de la formulation avant calandrage ou soufflage, éventuellement fabrication d'une ou plusieurs autres couches de l'enceinte par extrusion à l'aide d'au moins une formulation différente

de la formulation de l'étape a), par exemple à l'aide d'une formulation de PVOH ou EVOH,
c) mise en forme de l'enceinte par thermoformage de la plaque sur ou dans une forme appropriée,
d) éventuellement, remplissage de l'enceinte avec la substance sous forme de poudre ou liquide,
e) éventuellement, fermeture de l'enceinte à l'aide de l'opercule pour former la capsule.

De préférence, le procédé de préparation comprend une seule étape de moulage par injection ou par thermoformage à l'aide de la formulation définie dans l'invention. L'enceinte selon l'invention sera alors, selon ce mode de réalisation, constituée d'une seule couche de formulation définie dans l'invention.

Enfin, il est divulgué l'utilisation d'une formulation telle que définie dans la présente invention afin de préparer une capsule présentant une faible perméabilité aux gaz et à l'humidité.

Typiquement, l'enceinte selon l'invention présente une perméabilité à l'oxygène inférieure à 3,5 x $10^{-3}$ $cm^3$/capsule/24hrs à 0.21atm à 23°C et 50%HR (humidité relative), de préférence égale ou inférieure à 3,0 x $10^{-3}$ $cm^3$/capsule/24hrs à 0.21atm à 23°C et 50% HR, de préférence encore égale ou inférieure à 2,90 x $10^{-3}$ $cm^3$/capsule/24hrs à 0.21atm à 23°C et 50% HR, mesurée selon la norme ASTM F1307 ou ISO 15105-2. Lors du test de mesure de perméabilité, l'enceinte est fixée sur une plaque, de sorte que la plaque permet de « fermer » l'enceinte.

Avantageusement, la capsule selon l'invention présente une ou plusieurs des caractéristiques suivantes :

- une contrainte maximale d'au moins 35 MPa, de préférence allant de 35 à 65 MPa, plus préférentiellement de 39 à 60 MPa ; et/ou
- un module de Young d'au moins de 900 MPa, de préférence allant de 1000 à 2400 MPa, plus préférentiellement de 1050 à 2100 MPa ; et/ou
- un allongement à la contrainte maximale inférieure ou égale à 8%, de préférence allant de 2 à 8%, plus préférentiellement de 2,5 à 7% ; et/ou
- une contrainte à la rupture de 25 à 80 MPa, de préférence de 35 à 70 MPa, plus préférentiellement de 40 à 65 MPa ; et/ou
- un allongement à la rupture de 1 à 15%, de préférence de 2 à 10%, plus préférentiellement de 2,5 à 8% ; et/ou
- une résilience au choc allant de 2 à 20 kJ/$m^2$, de préférence de 3 à 15 kJ/$m^2$, plus préférentiellement de 4 à 10 kJ/$m^2$.

Ces caractéristiques peuvent être mesurées conformément aux méthodes décrite dans la partie expérimentale.

Par exemple, la contrainte maximale, le module de Young, l'allongement à la contrainte maximale, la contrainte à la ruptude et l'allongement à la rupture sont mesurées en flexion selon la norme NF EN ISO 178 à une vitesse de 10 mm/min et avantageusement à une température comprise entre 20 et 23°C et un taux d'humidité relative entre 45 et 55%.

La résilience au choc peut être mesurée selon la norme NF ISO 179 (résistance au choc Charpy) avantageusement à une température comprise entre 20 et 23°C et un taux d'humidité relative entre 45 et 55%.

## Exemples

Les exemples ci-dessous illustrent des travaux, non exhaustifs, engagés par la Demanderesse

Exemple 1 : détermination des degrés de cristallinité des polymères P1 et P2

Différents polymères de la famille des PHA ont été sourcés chez plusieurs producteurs. Des analyses par DSC ont été réalisées sur un équipement TA instruments DSC 2920 (vitesse de chauffe : +/- 10°C/min ; masse d'échantillon d'environ 20 mg.

Le tableau 1 ci-dessous présente les résultats des analyses thermiques, notamment les températures de fusion (Tm), de cristallisation (Tc_n), de cristallisation froide (Tcc), d'enthalpie de fusion (ΔHm1), et le degré de cristallinité (Kc) de ces polymères (avec une enthalpie de fusion de la littérature pour le PHA complètement cristallin $\Delta H^{\circ 100\%}_{m}$, PHA = 146,6 J/g).

[Tableau 1]

| | Tc_n (°C) | Tm (°C) | ΔHm1 (J/g) | Tcc (°C) | Kc (%) |
|---|---|---|---|---|---|
| **PHBV 10** | 123 | 174 | 83,0 | - | 57% |
| **PHBH 12** | 62,1 | 160 | 23,5 | - | 16% |
| **PHBH 13** | 65 | 144 | 36,8 | - | 25% |
| **PHBH 15** | 44 | 107 ; 125 ; 163 | 14,3 | 57 | 10% |

(suite)

| | Tc_n (°C) | Tm (°C) | ΔHm1 (J/g) | Tcc (°C) | Kc (%) |
|---|---|---|---|---|---|
| **P3HB4HB 00** | 49 | 85 | 0,29 | / | 0,2% |

Ces caractérisations permettent de classer les polymères selon leur degré de cristallinité et ainsi ils permettent de classer les polymères selon la nomenclature P1 (plutôt cristallin) ou P2 (faiblement cristallin voir amorphe).

Exemple 2 : formulations à base de polymères P1, P2 et autres additifs - Impact sur les propriétés mécaniques

La Demanderesse a réalisé plusieurs formulations par extrusion, listées dans le tableau 2 ci-dessous dans lequel les % sont des % en poids :

[Tableau 2]

| Formulation | composition |
|---|---|
| **F89** | 80% PHBV 10 + 20% Kaolin |
| **F90** | 72% PHBV 10 + 25% Kaolin + 3% Triethyl citrate |
| **F91** | 90% PHBV 10 + 5% P3HB4HB 00 + 5% Kaolin |
| **F92** | 85% PHBV 10 + 5% P3HB4HB 00 + 10% Kaolin |
| **F93** | 80% PHBV 10 + 20% F89 |
| **F94** | 90% (80% PHBV 10 + 20% F89) + 10% P3HB4HB 00 |

Les formulations F89, F90 et F93 sont des formulations comparatives alors que les formulations F91, F92 et F94 sont selon l'invention.

Des éprouvettes choc et de flexion (dimension : L = 78 mm ; l = 10 mm et Ep = 4 mm) ont été réalisées sur une presse DK 25T à partir de ces formulations. De plus, certains polymères P1 et P2 ont été injectés.

Le tableau 3 ci-dessous présente les propriétés mécaniques en flexion selon la norme NF EN ISO 178, mesurées sur un Dynamomètre Adamel Lhomargy avec un capteur de force de 500 N, à une vitesse de déformation de 10 mm/min.

Les mesures sont réalisées à une température comprise entre 20 et 23°C et un taux d'humidité relative entre 45 et 55%.

« Cont. max » (MPa) désigne la contrainte maximale.
« Allongement à cont. max » désigne l'allongement à la contrainte maximale.
« Cont. à rupture » désigne la contrainte à la rupture.

Les échantillons testés sont les polymères du tableau 1 et les formulations du tableau 2.

[Tableau 3]

| Echantillon | Nombre de tests | Cont. max (MPa) | Module de Young (MPa) | Allongement à cont. max. (%) | Cont. à rupture (MPa) | Allongeme nt à la rupture (%) |
|---|---|---|---|---|---|---|
| PHBH 12 | 5 | 12 ± 0,65 | 204 ± 37 | 9,23 ± 0,57 | / | / |
| PHBH 13 | 4 | 36 ± 1,95 | 529 ± 43 | 10,18 ± 0,26 | / | / |
| PHBH 15 | 3 | 24 ± 0,47 | 280 ± 6 | 10,68 ± 0,15 | / | / |
| PHBV 10 | 4 | 48 ± 3,54 | 1015 ± 110,00 | 4,89 ± 0,67 | 46 ± 3,39 | 5,01 ± 0,71 |
| F89 | 5 | 52 ± 6,01 | 1798 ± 133 | 2,62 ± 0,34 | 51 ± 5,94 | 2,63 ± 0,35 |
| F90 | 5 | 44 ± 4,69 | 1737 ± 275 | 2,50 ± 0,30 | 43 ± 4,51 | 2,53 ± 0,31 |
| F91 | 5 | 55 ± 3,80 | 1408 ± 157 | 4,37 ± 0,55 | 53 ± 3,63 | 4,56 ± 0,64 |
| F92 | 5 | 55 ± 1,71 | 1378 ± 176 | 4,84 ± 0,41 | 53 ± 2,49 | 5,06 ± 0,57 |
| F93 | 5 | 53 ± 5,75 | 1728 ± 173 | 3,51 ± 0,66 | 52 ± 5,55 | 3,57 ± 0,69 |

(suite)

| Echantillon | Nombre de tests | Cont. max (MPa) | Module de Young (MPa) | Allongement à cont. max. (%) | Cont. à rupture (MPa) | Allongeme nt à la rupture (%) |
|---|---|---|---|---|---|---|
| F94 | 5 | 49 ± 1,46 | 1142 ± 81 | 6,06 ± 0,88 | 47 ± 1,72 | 6,40 ± 1,11 |

Les formulations selon l'invention possèdent un module de Young de l'ordre de 1000 à 1410 MPa. Ceci montre que la formulation selon l'invention est peu rigide comparé aux formulations comparatives ou même aux polymères ce qui leur confère une souplesse recherchée dans le domaine.

Quant à l'allongement à la rupture qui définit la capacité d'un matériau à s'allonger avant de rompre lorsqu'il est sollicité en traction ou en flexion, les résultats obtenus avec les formulations selon l'invention, de l'ordre de 5 à 7 %, montrent une meilleure capacité des mélanges à se déformer avant rupture.

Le tableau 4 ci-dessous donne les résultats de résilience au choc ($A_{cu}$) mesurée selon la norme NF ISO 179 (Résistance au choc Charpy). Les mesures sont réalisées à une température comprise entre 20 et 23°C et un taux d'humidité relative entre 45 et 55%.

[Tableau 4]

| | Résilience $A_{cU}$ [kJ/m$^2$] |
|---|---|
| **PHBH 12** | 27,4 +/- 2,7 |
| **PHBH 13** | 35,5 +/- 2,8 |
| **PHBH 15** | 46,7 +/- 1,7 |
| **PHBV 10** | 4,2 +/-1,1 |
| **F89** | 3,4 +/- 0,6 |
| **F90** | 5,8 +/- 2,1 |
| **F91** | 7,8 +/- 0,9 |
| **F92** | 7,6 +/- 1,0 |
| **F93** | 4,4 +/- 1,3 |
| **F94** | 8,7 +/- 0,7 |

En ce qui concerne les polymères, le PHBH 12 et le PHBV 15 n'ont montré aucune rupture au choc alors qu'une rupture complète a eu lieu pour le PHBH 13 et le PHBV 10.

De plus, les formulations selon l'invention montrent une certaine souplesse comparé aux formulations ne comprenant pas de polymère P2. En effet, les exemples du tableau 4 illustrent l'intérêt de l'invention : les résultats obtenus pour les formulations comparatives F89, F90 et F93, ne comportant aucun polymère P2 (plutôt faiblement cristallin voire plutôt amorphe) montrent que ces formulations sont trop fragiles, alors que les formulations F91, F92 et F94, selon l'invention, permettent d'obtenir de meilleures propriétés. En effet, l'incorporation de polymères P2 permet d'apporter de la souplesse et de la résilience à la composition finale, engendrant une bonne fonctionnalité d'usage des capsules.

Les tableaux 3 et 4 montrent que les capsules selon l'invention présentent une meilleure résilience et un meilleur allongement à la rupture que les formulations qui ne sont pas selon l'invention, la résilience et l'allongement à la rupture étant des facteurs importants influençant la fragilité de la capsule durant la chaîne de fabrication ou lors de son utilisation.

La Demanderesse a également mesuré les propriétés thermiques des formulations. Le tableau 5 ci-dessous présente les degrés de cristallinité des formulations F90 à F94, selon les mêmes modalités que pour les polymères P1 et P2 (de l'exemple 1).

[Tableau 5]

| | Tc_n (°C) | Tm (°C) | ΔHm1 (J/g) | Kc1 (%) |
|---|---|---|---|---|
| **F90** | 120 | 171 | 83,3 | 79% |
| **F91** | 124 | 174 | 87,7 | 67% |
| **F92** | 125 | 174 | 85,3 | 69% |

(suite)

| | Tc_n (°C) | Tm (°C) | ΔHm1 (J/g) | Kc1 (%) |
|---|---|---|---|---|
| **F93** | 127 | 174 | 107,5 | 77% |
| **F94** | 124 | 174 | 79,5 | 63% |

Les résultats obtenus selon le tableau 5 montrent que l'incorporation de polymères P2 permet d'améliorer les propriétés mécaniques, notamment la résistance au choc.

Exemple 3 : impact sur les propriétés rhéologiques et la stabilité thermique

Les procédés de plasturgie pour la mise en œuvre et la mise en forme des polymères produisent des taux de cisaillement importants, vers $10^4$ $sec^{-1}$ pour l'extrusion et l'injection, ce qui induit des diminutions de masse moléculaire par coupure de chaines, et donc des pertes de performances. Il en est de même pour le stress thermique qui provoque des coupures de chaines par thermo-oxydation.

La Demanderesse a réalisé des études de stabilités thermiques sur certains polymères et certaines formulations pour mesurer l'impact d'ajout des polymères P2 aux polymères de type P1.

Les caractérisations ont été effectuées au plastomètre : température de 183°C ; charge de 2,16 kg ; tous les matériaux étuvés à 80°C pendant 2 heures.

La Figure 3 montre les écoulements des formulations (MFR) en fonction du temps dans le plastomètre.

Comme le montre la Figure 3, et de façon surprenante et inattendue, les polymères P2 stabilisent thermiquement les polymères P1, ainsi que les formulations à base de ceux-ci.

La mise en œuvre des formulations selon l'invention s'en trouve donc fortement facilitée.

Exemple 4 : étude de l'impact sur la perméabilité à l'oxygène

La perméabilité à l'oxygène des capsules obtenues à partir de différents polymères et de différentes formulations a été mesurée selon la norme ASTM F1307 ou ISO 15105-2.

Le Tableau 6 montre les résultats obtenus de la perméabilité à l'oxygène.

[Tableau 6]

| | [$cm^3$/capsule/24hrs à 0,21atm] à 23°C et 50%HR |
|---|---|
| PHBH 13 | $6,6*10^{-3}$ |
| PHBV 10 | $2,4*10^{-3}$ |
| F89 | $1,3*10^{-3}$ |
| F90 | $3,1*10^{-3}$ |
| F91 | $2,35*10^{-3}$ |
| F92 | $2,25*10^{-3}$ |
| F93 | $1,9*10^{-3}$ |
| F94 | $2,85*10^{-3}$ |

L'incorporation de polymères P2 ne détériore pas, de manière significative, la perméabilité de la matière à l'oxygène tout en, comme déjà mentionné, améliorant considérablement les propriétés mécaniques et thermiques des capsules.

La meilleure perméabilité à l'oxygène est obtenue avec les formulations comparatives F93 et F89 mais avec de faibles valeurs de résilience et d'allongement à la rupture et une haute cristallinité ce qui a pour effet de fragiliser la capsule pouvant la rendre cassante lors de son transport, lors de son passage sur les lignes de remplissage ou lors de son utilisation dans les machines pour l'extraction de la boisson.

Les formulations F91, F92 et F94 selon l'invention ont un effet plastifiant comparé à une formulation comparative dans laquelle a été ajoutée une charge minérale afin d'augmenter la perméabilité à l'oxygène, sans pour autant pénaliser de manière significative la perméabilité à l'oxygène sur la formulation finale.

En conclusion, l'objet de l'invention présente un quadruple intérêt: la combinaison maîtrisée selon l'invention de polymères P1 avec un degré de cristallinité supérieur ou égal à 50%, et l'ajout de polymères P2 avec un degré de

cristallinité inférieur ou égal à 30% et plus particulièrement inférieure ou égal à 5%, additivés ou non (en charges inorganiques, plastifiants, ... ) permet de :

- satisfaire aux exigences de propriétés mécaniques d'usage des capsules dans une machine pour l'extraction d'une boisson, les polymères P2 apportant une résilience et une souplesse ;
- satisfaire aux exigences de propriétés mécaniques lors du transport et du passage sur les lignes de remplissages des capsules, les polymères P2 apportant une résilience et une souplesse ;
- garantir un très bon niveau de perméabilité aux gaz, notamment à l'oxygène : les polymères P2 permettent d'obtenir de hauts niveaux de degrés de cristallinité, avec ou sans agents nucléants, le caractère faiblement cristallin voire plutôt amorphe des polymères P2, même en faible concentration,
- améliore la stabilité thermique des formulations lors de leur mise en œuvre dans les procédés de plasturgie, à haut taux de cisaillement et des niveaux de températures élevés

Ainsi, la présence d'au moins un polymère amorphe avec un degré de cristallinité inférieur ou égal à 5% dans la formulation de la capsule permet d'obtenir une capsule qui répond aux exigences de perméabilité à l'oxygène et qui ne se casse pas tout en restant biodégradable, en particulier dans les conditions de compostage industriel et de compostage domestique (processus biologique aérobie) voir par méthanisation (processus biologique anaérobie) et ce même lorsque l'enceinte est constituée d'une seule couche de formulation

En conclusion, les capsules obtenues selon l'invention, i.e. obtenues à partir d'une formulation comprenant un polymère faiblement cristallin voire plutôt amorphe et un polymère plutôt cristallin ne sont pas cassantes et présentent toujours une bonne rigidité ainsi qu'une résistance aux chocs et un allongement à rupture suffisants pour être compatibles avec les machines type Nespresso®. L'ajout d'un plastifiant (tel que le Citrofol) ne permet pas d'obtenir d'aussi bonnes propriétés de tenue mécanique et barrière à l'oxygène.

Ainsi, la présence d'au moins un copolymère faiblement cristallin de la famille des PHA voire plutôt amorphe dans la formulation de la capsule permet d'obtenir une capsule qui répond aux exigences de perméabilité à l'oxygène et qui ne se casse pas tout en restant biodégradable, en particulier dans les conditions de compostage industriel et de compostage domestique et ce même lorsque l'enceinte est constituée d'une seule couche de formulation.

## Revendications

1. Capsule (1) pour la préparation d'une boisson, ladite capsule comportant une enceinte (2) comportant au moins une paroi latérale (4) ayant un rebord circulaire (5), **caractérisée en ce que** la paroi latérale et le rebord circulaire sont formés par moulage par injection ou par thermoformage d'au moins une formulation comprenant:

   (i) au moins un polymère P1 choisi parmi les polyhydroxyalkanoates (PHA); et
   (ii) au moins un polymère P2 choisi parmi les polyhydroxyalkanoate (PHA), ledit polymère P1 ayant un degré de cristallinité (Kc1) supérieur ou égal à 50%, et ledit polymère P2 ayant un degré de cristallinité (Kc2) inférieur ou égal à 30 %, de préférence inférieur ou égal à 5%.

2. Capsule selon la revendication 1, **caractérisée en ce que** lesdits polyhydroxyalkanoates sont choisis parmi les polymères polyhydroxybutyrate (PHB), de préférence le polymère P1 et/ou le polymère P2 sont des copolymères PHB.

3. Capsule selon l'une des revendications 1 ou 2, **caractérisée en ce que** le polymère P1 contient des unités monomériques M1a d'hydroxybutyrates 3HB et des unités monomériques M1b choisis parmi le hydroxyvalérate HV, le 3-hydroxyhexanoate HH ou le 4hydroxy-butyrate 4HB, M1a étant différent de M1b, et/ou le polymère P2 contient des unités monomériques M2a d'hydroxybutyrates 3HB et des unités monomériques M2b choisis parmi l'hydroxyvalérate HV, le 3-hydroxyhexanoate HH ou le 4hydroxy-butyrate 4HB, M2a étant différent de M2b, de préférence le ratio massique M1b/M1a est inférieur ou égal à 0,7, de préférence inférieur ou égal à 0,6 et/ou le ratio massique M2b/M2a est supérieur ou égal à 0,05, de préférence va de 0,1 à 1, de préférence encore de 0,2 à 0,9.

4. Capsule selon l'une des revendications 1 à 3, **caractérisée en ce que** le polymère P1 et/ou le polymère P2 sont obtenus par génie fermentaire aérobie et/ou anaérobie de manière biosourcée.

5. Capsule selon l'une quelconque des revendications 1 à 4, **caractérisée en ce que** le ou les polymères P1 représentent de 70 à 99% en poids, de préférence de 80 à 98% en poids, du poids total des polymères P1 et P2 et/ou le ou les polymères P2 représentent de 1 à 30% en poids, de préférence de 2 à 20% en poids, de préférence

encore de 3 à 10% en poids, du poids total des polymères P1 et P2.

**6.** Capsule selon l'une quelconque des revendications 1 à 5, dans laquelle la formulation comprend de 50 à 99,9% en poids, de préférence de 75 à 99,5% en poids, avantageusement de 90 à 99% en poids, de polymère(s) P1 et P2, par rapport au poids total de la formulation.

**7.** Capsule selon l'une quelconque des revendications 1 à 6, **caractérisée en ce que** la formulation comprend en outre au moins une charge minérale ou organique, de préférence en une proportion allant de 0,1 à 50% en poids, de préférence de 0,5 à 25% en poids, avantageusement de 1 à 15% en poids, de préférence ladite charge est choisie parmi la silice, les silicates, les hydroxydes double laminaire (HDL), l'oxyde de titane, la vitamine E, les protéines animales ou végétales plastifiées, ou leurs mélanges, par rapport au poids total de la formulation.

**8.** Capsule selon la revendication 7, dans laquelle la surface spécifique BET des silicates est comprise entre 1 et $250m^2/g$ et/ou le diamètre médian des silicates est compris entre 0,5 à 20$\mu$m et/ou le facteur de forme dimensionnelle des silicates est supérieur ou égal à 1:2.

**9.** Capsule selon l'une quelconque des revendications 1 à 8, dans laquelle la formulation comprend en outre au moins un alcool polyvinylique ou éthylène vinylique, de préférence en une quantité allant de 1 à 30% en poids, de préférence de 2 à 20% en poids, avantageusement de 5 à 10% en poids, par rapport au poids total de la formulation.

**10.** Capsule selon l'une quelconque des revendications 1 à 9, ladite capsule

- étant biodégradable et/ou compostable en condition industrielle ou domestique ou par méthanisation et/ou
- contenant au moins 80% en poids de carbone biosourcé, par rapport au poids total des atomes de carbone de la capsule.

**11.** Capsule selon l'une quelconque des revendications 1 à 10, dans laquelle l'enceinte comporte un fond et dans laquelle le fond, la paroi latérale et le rebord circulaire sont formés par moulage par injection ou par thermoformage, de préférence en une seule couche de ladite formulation dans un moule.

**12.** Capsule selon l'une quelconque des revendications 1 à 11, contenant une substance sous forme de poudre ou liquide, ladite capsule comprenant un opercule (6) soudé sur le pourtour du rebord de l'enceinte, de préférence l'opercule comprend un film monocouche ou multicouche, ledit film comprenant un ou plusieurs matériaux choisi(s) parmi des matériaux biodégradables et compostable selon un processus biologique aérobie et/ou méthanisable selon un processus biologique anaérobie, de préférence le matériau est choisi parmi le papier, les non-tissés, la cellulose, les couches SiOx, les polymères à base d'acide polylactique, les polyhydroxyalcanoates, les couches hybrides polymère organique et fibres inorganiques, les couches enduites d'alcool polyvinylique ou de copolymère d'éthylène et d'alcool vinylique, les couches métallisées de préférence à l'aide d'aluminium, ces couches de matériaux étant éventuellement séparées par une couche de colle.

**13.** Capsule selon la revendication 12, dans laquelle l'opercule est constitué d'un film multicouche comprenant :

i) un film de papier ou papier filtre,
ii) une couche barrière, de préférence la couche barrière comprenant une ou plusieurs couches choisie(s) parmi :

- une couche barrière hybride comprenant un polymère organique et des composés inorganiques, et/ou
- une coche barrière SiOx, et/ou
- une couche barrière de cellulose,

iii) une couche de non-tissé, ladite couche de non-tissé étant à l'intérieur de la capsule.

**14.** Capsule selon la revendication 12, dans laquelle l'opercule est constitué d'un film multicouche comprenant :

i) une couche barrière,
ii) un film à base de biopolymères tel que les polyhydroxyalcanoates PHA ou les polybutylenadipate-terephthalate PBAT ou les polybutylensuccinate PBS ou les polybutylene-co aliphate co- téréphtalate PBAIT ou encore les acides polylactiques PLA,

Ou d'un film multicouche comprenant :

i) un film à base de biopolymères tel que les polyhydroxyalcanoates PHA ou les polybutylenadipate-terephthalate PBAT ou les polybutylensuccinate PBS ou les polybutylene-co aliphate co- téréphtalate PBAIT ou encore les acides polylactiques PLA,
ii) une couche barrière,
iii) un film à base de biopolymères tel que les polyhydroxyalcanoates PHA ou les polybutylene co-adipate co-terephthalate PBAT ou les polybutylene succinate PBS ou les polybutylene co-aliphate-co téréphtalate PBAIT ou encore les acides polylactiques PLA.

**15.** Procédé de fabrication d'une capsule selon l'une quelconque des revendications 1 à 14, comprenant les étapes suivantes :

a) Préparation de la formulation par mélange des ingrédients, lesdits ingrédients pouvant éventuellement être extrudés,
b) moulage par injection de la formulation obtenue à l'étape a) dans un moule pour former une couche d'au moins la paroi latérale (4) et le rebord circulaire (5) de l'enceinte (2), éventuellement une ou plusieurs couches de l'enceinte (2) peuvent être moulées par injection, à l'aide d'une formulation différente de la formulation de l'étape a),
c) remplissage de l'enceinte (2) avec la substance sous forme de poudre ou liquide, si le fond n'est pas moulé par injection de la formulation, alors l'étape de remplissage est précédée d'une étape de mise en place d'un fond de type monocouche ou multicouche afin de former l'enceinte,
d) éventuellement, fermeture de l'enceinte (2) à l'aide de l'opercule pour former la capsule,

Ou comprenant les étapes suivantes :

a) Préparation de la formulation par mélange des ingrédients, lesdits ingrédients pouvant éventuellement être extrudés,
b) Fabrication de plaques ou d'un film par extrusion de la formulation avant calandrage ou soufflage, éventuellement fabrication d'une ou plusieurs autres couches d'au moins la paroi latérale (4) et le rebord circulaire (5) de l'enceinte par extrusion à l'aide d'au moins une formulation différente de la formulation de l'étape a), par exemple à l'aide d'une formulation de PVOH ou EVOH,
c) Mise en forme par thermoformage de la plaque ou du film dans une forme appropriée,
d) remplissage de l'enceinte (2) avec la substance sous forme de poudre ou liquide, si le fond n'est pas mis en forme par thermoformage lors de l'étape c), alors l'étape de remplissage est précédée d'une étape de mise en place d'un fond de type monocouche ou multicouche afin de former l'enceinte,
e) éventuellement, fermeture de l'enceinte (2) à l'aide de l'opercule pour former la capsule.

## Patentansprüche

**1.** Kapsel (1) für die Zubereitung eines Getränks, die Kapsel umfassend ein Gehäuse (2), umfassend mindestens eine Seitenwand (4), die einen kreisförmigen Rand (5) aufweist, **dadurch gekennzeichnet, dass** die Seitenwand und der kreisförmige Rand durch Spritzgießen oder Thermoformen mindestens einer Formulierung gebildet werden, umfassend:

(i) mindestens ein Polymer P1, das ausgewählt ist aus Polyhydroxyalkanoaten (PHA); und
(ii) mindestens ein Polymer P2, das ausgewählt ist aus Polyhydroxyalkanoat (PHA),

wobei das Polymer P1 einen Kristallinitätsgrad (Kc1) größer als oder gleich wie 50 % aufweist, und das Polymer P2 einen Kristallinitätsgrad (Kc2) kleiner als oder gleich wie 30 %, vorzugsweise kleiner als oder gleich wie 5 %, aufweist.

**2.** Kapsel nach Anspruch 1, **dadurch gekennzeichnet, dass** die Polyhydroxyalkanoate ausgewählt sind aus Polymeren von Polyhydroxybutyrat (PHB), vorzugsweise das Polymer P1 und/oder das Polymer P2 PHB-Copolymere sind.

**3.** Kapsel nach einem der Ansprüche 1 oder 2, **dadurch gekennzeichnet, dass** das Polymer P1 Monomereinheiten M1a von Hydroxybutyraten 3HB und Monomereinheiten M1b enthält, die ausgewählt sind aus Hydroxyvalerat HV, 3-Hydroxyhexanoat HH oder 4-Hydroxybutyrat 4HB, wobei M1a von M1b verschieden ist, und/oder das Polymer P2 Monomereinheiten M2a von Hydroxybutyraten 3HB und Monomereinheiten M2b enthält, die ausgewählt sind aus Hydroxyvalerat HV, 3-Hydroxyhexanoat HH oder 4-Hydroxybutyrat 4HB, wobei M2a von M2b verschieden ist, vorzugsweise das Massenverhältnis M1b/M1a kleiner als oder gleich wie 0,7, vorzugsweise kleiner als oder gleich wie 0,6 und/oder das Massenverhältnis M2b/M2a größer als oder gleich wie 0,05, es vorzugsweise im Bereich von 0,1 bis 1, noch mehr bevorzugt im Bereich von 0,2 bis 0,9 ist.

**4.** Kapsel nach einem der Ansprüche 1 bis 3, **dadurch gekennzeichnet, dass** das Polymer P1 und/oder das Polymer P2 durch aerobes und/oder anaerobes Fermentationsverfahren auf biobasierte Weise erlangt werden.

**5.** Kapsel nach einem der Ansprüche 1 bis 4, **dadurch gekennzeichnet, dass** das oder die Polymere P1 70 bis 99 Gewichts-%, vorzugsweise 80 bis 98 Gewichts-%, des Gesamtgewichts der Polymere P1 und P2 ausmachen, und/oder das Polymer oder die Polymere P2 1 bis 30 Gewichts-%, vorzugsweise 2 bis 20 Gewichts-%, bevorzugter 3 bis 10 Gewichts-%, des Gesamtgewichts der Polymere P1 und P2 ausmachen.

**6.** Kapsel nach einem der Ansprüche 1 bis 5, wobei die Formulierung 50 bis 99,9 Gewichts-%, vorzugsweise 75 bis 99,5 Gewichts-%, vorteilhafterweise 90 bis 99 Gewichts-%, Polymer(e) P1 und P2, bezogen auf das Gesamtgewicht der Formulierung, umfasst.

**7.** Kapsel nach einem der Ansprüche 1 bis 6, **dadurch gekennzeichnet, dass** die Formulierung ferner mindestens einen mineralischen oder organischen Füllstoff umfasst, vorzugsweise in einem Anteil von 0,1 bis 50 Gewichts-%, vorzugsweise 0,5 bis 25 Gewichts-%, vorteilhafterweise 1 bis 15 Gewichts-%, vorzugsweise der Füllstoff ausgewählt ist aus Siliciumdioxid, Silikaten, Doppellaminhydroxiden (HDL), Titanoxid, Vitamin E, plastifizierten tierischen oder pflanzlichen Proteinen oder deren Gemischen, bezogen auf das Gesamtgewicht der Formulierung.

**8.** Kapsel nach Anspruch 7, wobei die spezifische Oberfläche BET der Silikate zwischen 1 und 250 $m^2/g$ liegt und/oder der medianer Durchmesser der Silikate zwischen 0,5 und 20 $\mu m$ liegt und/oder der dimensionale Formfaktor der Silikate größer als oder gleich wie 1:2 ist.

**9.** Kapsel nach einem der Ansprüche 1 bis 8, wobei die Formulierung ferner mindestens einen Polyvinyl- oder Ethylenvinylalkohol umfasst, vorzugsweise in einer Menge von 1 bis 30 Gewichts-%, vorzugsweise von 2 bis 20 Gewichts-%, vorteilhafterweise von 5 bis 10 Gewichts-%, bezogen auf das Gesamtgewicht der Formulierung.

**10.** Kapsel nach einem der Ansprüche 1 bis 9, wobei die Kapsel

- unter industriellen oder häuslichen Bedingungen oder durch Methanisierung biologisch abbaubar und/oder kompostierbar ist, und/oder
- mindestens 80 Gewichts-% biobasiertem Kohlenstoff, bezogen auf das Gesamtgewicht der Kohlenstoffatome in der Kapsel enthält.

**11.** Kapsel nach einem der Ansprüche 1 bis 10, wobei das Gehäuse einen Boden umfasst und wobei der Boden, die Seitenwand und der kreisförmige Rand durch Spritzgießen oder Thermoformen, vorzugsweise in einer einzigen Schicht der Formulierung in einer Form, gebildet werden.

**12.** Kapsel nach einem der Ansprüche 1 bis 11, die eine Substanz in Form eines Pulvers oder einer Flüssigkeit enthält, die Kapsel umfassend einen Deckel (6), der an den Umfang des Rands des Gehäuses geschweißt ist, vorzugsweise wobei der Deckel einen ein- oder mehrschichtigen Film umfasst, der Film umfassend ein oder mehrere Materialien, die ausgewählt sind aus Materialien, die biologisch abbaubar und gemäß einem aeroben biologischen Prozess kompostierbar und/oder gemäß einem anaeroben biologischen Prozess methanisierbar sind, vorzugsweise wobei das Material ausgewählt ist aus Papier, Vliesstoffen, Zellulose, SiOx-Schichten, Polymeren auf Basis von Polymilchsäure, Polyhydroxyalkanoaten, Hybridschichten aus organischem Polymer und anorganischen Fasern, Schichten, die mit Polyvinylalkohol oder einem Copolymer aus Ethylen und Vinylalkohol beschichtet sind, Schichten, die vorzugsweise mit Aluminium metallisiert sind, wobei diese Materialschichten optional durch eine Klebstoffschicht getrennt sind.

**13.** Kapsel nach Anspruch 12, wobei der Deckel aus einem mehrschichtigen Film besteht, umfassend:

i) einen Papierfilm oder Filterpapier,

ii) eine Sperrschicht, die Sperrschicht vorzugsweise umfassend eine oder mehrere Schichten, die ausgewählt sind aus:

- einer hybride Sperrschicht, umfassend ein organisches Polymer und anorganische Verbindungen, und/oder
- eine SiOx-Sperrschicht, und/oder
- eine Sperrschicht aus Zellulose,

iii) eine Vliesstoffschicht, wobei die Vliesstoffschicht im Inneren der Kapsel ist.

**14.** Kapsel nach Anspruch 12, wobei der Deckel aus einem mehrschichtigen Film besteht, umfassend:

i) eine Sperrschicht,
ii) eine Folie auf Basis von Biopolymeren, wie beispielsweise Polyhydroxyalkanoaten PHA oder Polybutylenadipat-terephthalaten PBAT oder Polybutylensuccinaten PBS oder Polybutylen-co-aliphat-co-terephthalaten PBAIT oder auch Polymilchsäuren PLA,

oder aus einem mehrschichtigen Film, umfassend:

i) einen Film auf Basis von Biopolymeren, wie beispielsweise Polyhydroxyalkanoaten PHA oder Polybutylenadipat-terephthalaten PBAT oder Polybutylensuccinaten PBS oder Polybutylen-co-aliphat-co-terephthalaten PBAIT oder auch Polymilchsäuren PLA,
ii) eine Sperrschicht,
iii) einen Film auf Basis von Biopolymeren, wie beispielsweise Polyhydroxyalkanoaten PHA oder Polybutylen-co-dipat-co-terephthalat PBAT oder Polybutylensuccinat PBS oder Polybutylen-co-aliphat-co-terephthalat PBAIT oder auch Polymilchsäuren PLA.

**15.** Herstellungsverfahren einer Kapsel nach einem der Ansprüche 1 bis 14, umfassend die folgenden Schritte:

a) Herstellen der Formulierung durch Mischen der Zutaten, wobei die Zutaten eventuell extrudiert werden können,
b) Spritzgießen der in Schritt a) erlangten Formulierung in eine Form, um eine Schicht zumindest der Seitenwand (4) und des kreisförmigen Rands (5) des Gehäuses (2) zu bilden, optional wobei eine oder mehrere Schichten des Gehäuses (2) spritzgegossen werden können, unter Verwendung einer Formulierung, die sich von der Formulierung in Schritt a) unterscheidet,
c) Füllen des Gehäuses (2) mit der Substanz in Form von Pulver oder Flüssigkeit, wenn der Boden nicht durch Einspritzen der Formulierung geformt wird, dann geht dem Schritt des Füllens ein Schritt eines Einsetzens eines Bodens vom Typ einer einzelnen Schicht oder mehrerer Schichten voraus, um das Gehäuse zu bilden,
d) optional Verschließen des Gehäuses (2) mittels des Deckels, um die Kapsel zu bilden,

oder umfassend die folgenden Schritte:

a) Herstellen der Formulierung durch Mischen der Zutaten, wobei die Zutaten eventuell extrudiert werden können,
b) Herstellen von Platten oder eines Films durch Extrusion der Formulierung vor Kalandrieren oder Blasen, optional Herstellen einer oder mehrerer weiterer Schichten zumindest der Seitenwand (4) und des kreisförmigen Rands (5) des Gehäuses durch Extrusion mittels mindestens einer Formulierung, die sich von der Formulierung in Schritt a) unterscheidet, z. B. mittels einer PVOH- oder EVOH-Formulierung,
c) Formgeben durch Thermoformen der Platte oder des Films in eine geeignete Form,
d) Füllen des Behälters (2) mit der Substanz in Form von Pulver oder Flüssigkeit, wenn der Boden im Schritt c) nicht durch Thermoformen geformt wird, dann geht dem Schritt eines Füllens ein Schritt eines Einsetzens eines Bodens vom Typ einer einzelnen Schicht oder mehrerer Schichten voraus, um das Gehäuse zu bilden,
e) optional Verschließen des Gehäuses (2) mittels des Deckels, um die Kapsel zu bilden.

## Claims

**1.** A capsule (1) for preparing a beverage, said capsule comprising a container (2) comprising at least one side wall (4)

having a circular rim (5), **characterized in that** the side wall and the circular rim are formed by injection molding or by thermoforming of at least one formulation comprising:

(i) at least one polymer P1 chosen from polyhydroxyalkanoates (PHA); and
(ii) at least one polymer P2 chosen from polyhydroxyalkanoates (PHA),
said polymer P1 having a degree of crystallinity (KC1) greater than or equal to 50%,
and said polymer P2 having a degree of crystallinity (KC2) of less than or equal to 30%, preferably less than or equal to 5%.

2. The capsule according to claim 1, **characterized in that** said polyhydroxyalkanoates are chosen from polyhydroxybutyrate (PHB) polymers, preferably the polymer P1 and/or the polymer P2 are PHB copolymers.

3. The capsule according to one of claims 1 or 2, **characterized in that** the polymer P1 contains monomer units M1a of hydroxybutyrates 3HB and monomer units M1b selected from hydroxyvalerate HV, 3-hydroxyhexanoate HH or 4-hydroxybutyrate 4HB, M1a being different from M1b, and/or the polymer P2 contains monomer units M2a of hydroxybutyrates 3HB and monomer units M2b selected from hydroxyvalerate HV, 3-hydroxyhexanoate HH or 4-hydroxybutyrate 4HB, M2a being different from M2b, preferably the weight ratio M1b/M1a is less than or equal to 0.7, preferably less than or equal to 0.6 and/or the M2b/M2a weight ratio is greater than or equal to 0.05, preferably ranges from 0.1 to 1, else preferably from 0.2 to 0.9.

4. The capsule according to one of claims 1 to 3, **characterized in that** the polymer P1 and/or the polymer P2 are obtained by aerobic and/or anaerobic fermentative engineering in a bio-based manner.

5. The capsule according to any of claims 1 to 4, **characterized in that** the polymer(s) P1 represent(s) from 70 to 99% by weight, preferably from 80 to 98% by weight, of the total weight of the polymers P1 and P2 and/or the polymer(s) P2 represent(s) from 1% to 30% by weight, preferably from 2% to 20% by weight, else preferably from 3% to 10% by weight, of the total weight of the polymers P1 and P2.

6. The capsule according to any of claims 1 to 5, wherein the formulation comprises from 50 to 99.9% by weight, preferably from 75 to 99.5% by weight, advantageously from 90 to 99% by weight, of polymer(s) P1 and P2, with respect to the total weight of the formulation.

7. The capsule according to any of claims 1 to 6, **characterized in that** the formulation further comprises at least one inorganic or organic filler, preferably in a proportion ranging from 0.1 to 50% by weight, preferably from 0.5 to 25% by weight, advantageously from 1 to 15% by weight, preferably said filler is chosen from silica, silicates, double laminar hydroxides (HDL), titanium oxide, vitamin E, plasticized animal or vegetable proteins, or mixtures thereof, with respect the total weight of the formulation.

8. The capsule according to claim 7, wherein the BET specific surface area of the silicates is comprised between 1 and 250 $m^2/g$ and/or the median diameter of the silicates is comprised between 0.5 and 20 $\mu m$ and/or the dimensional form factor of the silicates is greater than or equal to 1:2.

9. The capsule according to any of claims 1 to 8, wherein the formulation further comprises at least one polyvinyl alcohol or ethylene vinyl, preferably in a quantity ranging from 1 to 30% by weight, preferably from 2 to 20% by weight, advantageously from 5 to 10% by weight, with respect to the total weight of the formulation.

10. The capsule according to any of claims 1 to 9, wherein the capsule:

- is biodegradable and/or compostable under industrial or domestic conditions or by anaerobic digestion and/or
- contains at least 80% by weight of bio-based carbon, relative to the total weight of the carbon atoms of the capsule.

11. The capsule according to any of claims 1 to 10, wherein the container includes a bottom and wherein the bottom, the side wall and the circular rim are formed by injection molding or by thermoforming, preferably in only one layer of said formulation in a mold.

12. The capsule according to any of claims 1 to 11, containing a substance in the form of powder or liquid, said capsule comprising a seal (6) welded on the circumference of the rim of the container, preferably the seal comprising a

monolayer or multilayer film, said film comprising one or a plurality of materials chosen from materials that are biodegradable and compostable according to an aerobic biological process and/or that can be broken down by anaerobic digestion according to an anaerobic processus, preferably the material is chosen from paper, nonwoven fabrics, cellulose, SiOx layers, polylactic acid polymers, polyhydroxyalkanoates, hybrid layers of organic polymer and inorganic fibers, layers coated with polyvinyl alcohol or with ethylene-vinyl alcohol copolymer, layers metallized preferably with aluminum, the layers of materials being optionally separated by a layer of adhesive.

**13.** The capsule according to claim 12, wherein the seal consists of a multilayer film comprising:

I) a film of paper or filter paper,
ii) a barrier layer, preferably the barrier layer comprising one or a plurality of layers chosen from:

- a hybrid barrier layer comprising an organic polymer and inorganic compounds, and/or
- a SiOx barrier, and/or
- a cellulose barrier layer,

iii) a layer of nonwoven fabric, said layer of nonwoven fabric being inside the capsule.

**14.** The capsule according to claim 12, wherein the seal consists of a multilayer film comprising:

i) a barrier layer,
ii) a film containing biopolymers such as polyhydroxyalkanoates PHA or polybutylenadipate-terephthalate PBAT or polybutylensuccinate PBS or polybutylene-co aliphatic co-terephthalate PBAIT or polylactic acids PLA,

Or of a multilayer film comprising:

i) a film containing biopolymers such as polyhydroxyalkanoates PHA or polybutylenadipate-terephthalate PBAT or polybutylensuccinate PBS or polybutylene-co aliphatic co-terephthalate PBAIT or polylactic acids PLA,
ii) a barrier layer,
iii) a film containing biopolymers such as polyhydroxyalkanoates PHA or polybutylene co-adipate co-terephthalate PBAT or polybutylene succinate PBS or polybutylene co-aliphatic-co terephthalate PBAIT or polylactic acids PLA.

**15.** A manufacturing method for a capsule according to any of claims 1 to 14, comprising the following steps:

a) Preparing the formulation by mixing the ingredients, where the ingredients can be optionally extruded,
b) injection molding of the formulation obtained in step a) in a mold so as to form a layer of the of at least the side wall (4) and the circular rim (5) of the container (2), optionally one or a plurality of layers of the container (2) can be injection molded using a formulation different from the formulation in step a),
c) filling the container (2) with the substance in powder or liquid form, if the bottom is not molded by injection of the formulation, then the filling step is preceded by a step of placing a single-layer or multi-layer bottom to form the container,
d) optionally, closing the container (2) using the seal for forming the capsule,

Or comprising the following steps:

a) Preparing the formulation by mixing the ingredients, where the ingredients can be optionally extruded,
b) Manufacturing plates or a film by extrusion of the formulation before calendaring or blowing, optionally manufacturing one or a plurality other layers of at least the side wall (4) and the circular rim (5) of the container by extrusion using at least one formulation different from the formulation of step a), e.g. using a formulation of PVOH or EVOH,
c) Shaping by thermoforming of the plate or film into a suitable shape,
d) filling the container (2) with the substance in powder or liquid form, if the bottom is not shaped by thermoforming during step c), then the filling step is preceded by a step of placing a single-layer or multi-layer bottom to form the container,
e) optionally, closing the container (2) using the seal for forming the capsule.

[Fig. 1]

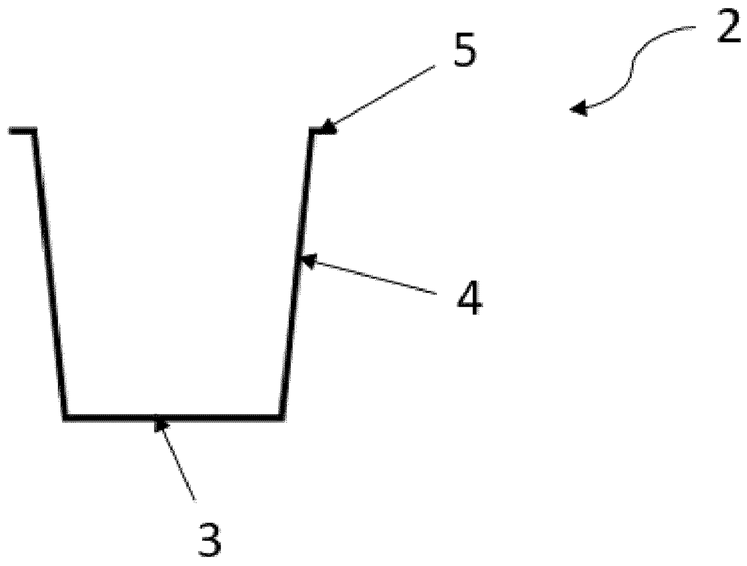


[Fig. 2]

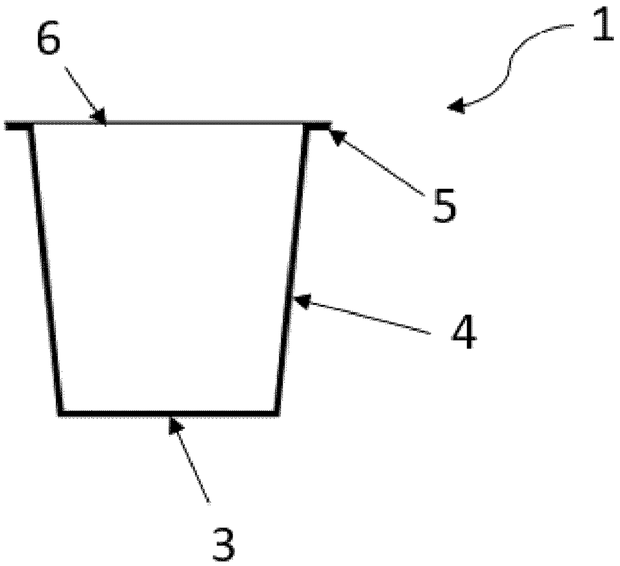

[Fig. 3]

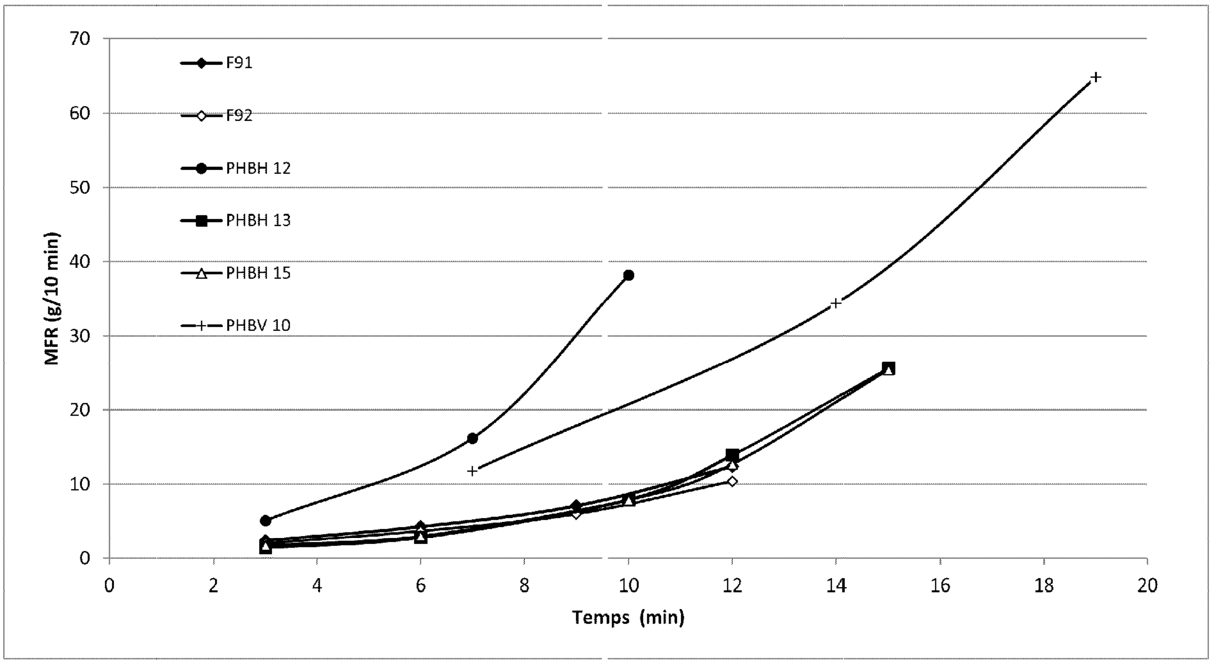
70
60
50
40
30
20
10
0
0
2
4
6
8
10
12
14
16
18
20
F91
F92
PHBH 12
PHBH 13
PHBH 15
PHBV 10
MFR (g/10 min)
Temps (min)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2021239982 A1
- US 2017342261 A1


### Littérature non-brevet citée dans la description


- **VORLEAK CHEA et al.** *J. APPL. POLYM. SCI.*, 2015
- **ZONGLIN LI et al.** *Polymers*, 2020, vol. 12, 1300
- **SUNNY MODI et al.** *European Polymer Journal*, 2011, vol. 47, 179-186